# EUROPEAN PATENT APPLICATION

(11) **EP 4 420 511 A1**
(43) Date of publication of application: **28.08.2024**
(21) Application number: 22883368.7
(22) Date of filing: 06.10.2022
(51) Int. Cl.: A01G 7/00, G06Q 50/02

(54) **PROGRAM, CONTROL DEVICE AND CONTROL METHOD**

(30) Priority: 18.10.2021 JP 2021170097
(71) Applicant: Sony Group Corporation, Tokyo 108-0075 (JP)
(72) Inventor: SUZUKI, Godai, Tokyo, 1050014 (JP); KATANO, Kosuke, Tokyo, 1050014 (JP); FUNABASHI, Masatoshi, Tokyo, 1050014 (JP)
(74) Representative: Witte, Weller & Partner Patentanwälte mbB
(86) International application number: PCT/JP2022/037379
(87) International publication number: WO 2023/068063

(57) **Abstract**

The present technology relates to a program, a control device, and a control method that can assist in achieving desired biodiversity.

Mist spraying to an ecosystem is controlled according to diversity information related to biodiversity of an ecosystem and target information related to biodiversity set as a target. The present technology can be applied to a spray system that sprays mist for example in a field.

## Description

### [Technical Field]

The present technology relates to programs, control devices, and control methods, and more particularly to a program, a control device, and a control method that can for example assist in achieving desired biodiversity.

### [Background Art]

For example, PTL 1 and PTL 2 disclose techniques for spraying mist on an ecosystem.

PTL 1 indicates that the wet conditions of plant species are estimated from their temperatures to control a mist spraying unit, so that adverse effects caused by prolonged wet conditions of the plant species are mitigated.

PTL 2 indicates that water is replenished by mist supply according to a detection result by a soil moisture sensor.

### [Citation List]

### [Patent Literature]

[PTL 1]
   WO 2019/123933
[PTL 2]
   JP 2015-080440A

### [Summary]

### [Technical Problem]

The disclosures of PTL 1 and PTL 2 are on the basis of monoculture and do not take into consideration of biodiversity at all.

Meanwhile, since increased biodiversity allows people to enjoy various ecosystem services, there has been a growing demand in recent years to achieve desired levels of biodiversity.

With the foregoing in view, the present technology is directed to the capability of assisting in achieving desired biodiversity.

The control device or program according to the present technology is a control device that includes a control unit that controls mist spraying on an ecosystem according to diversity information related to biodiversity of the ecosystem and target information related to target biodiversity or a program for causing a computer to function as such a control device.

The control method according to the present technology includes controlling mist spraying on an ecosystem according to diversity information related to biodiversity of the ecosystem and target information related to target biodiversity.

According to the present technology, the mist spraying on the ecosystem is controlled according to the diversity information related to the biodiversity of the ecosystem and the target information related to the target biodiversity.

The control device may be a discrete device or an internal block that constitutes a single device.

The program can be provided by transmitting the program via a transmission medium or recording the program on a recording medium.

### [Brief Description of Drawings]

[Fig. 1]

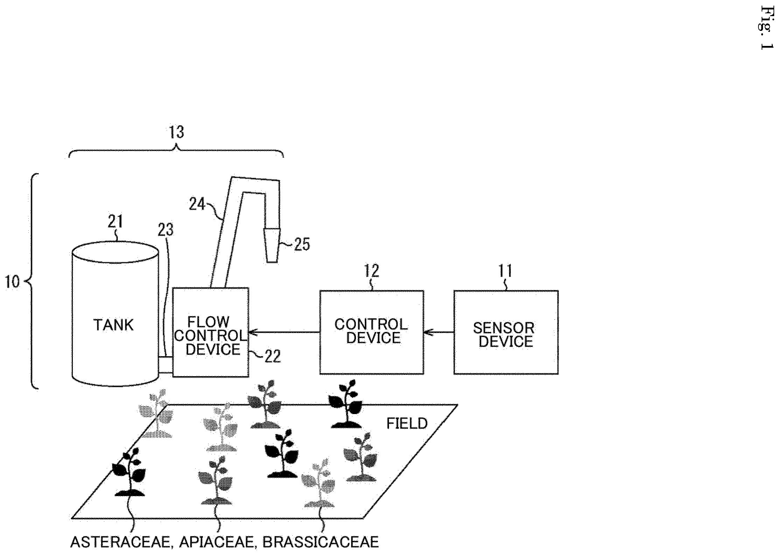

   Fig. 1 illustrates an exemplary configuration of a spray system according to an embodiment to which the present technology is applied.
[Fig. 2]

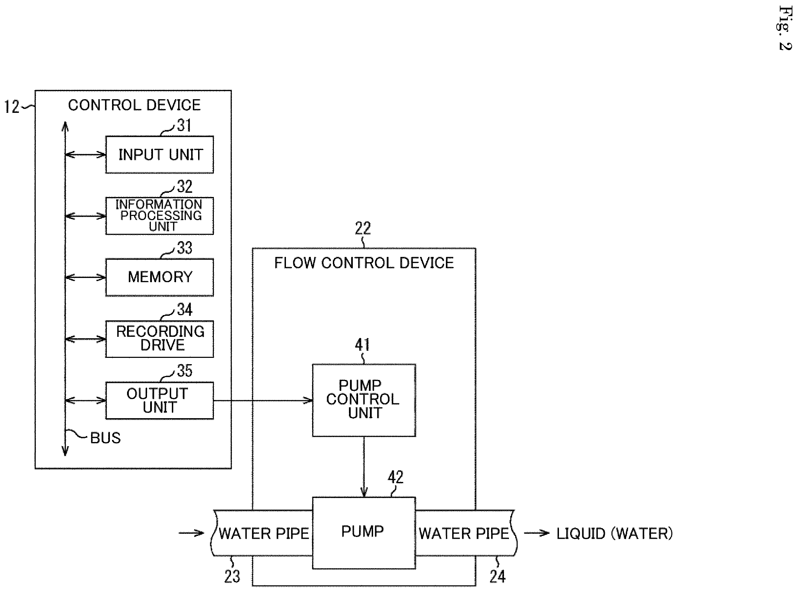

   Fig. 2 is a block diagram of an exemplary configuration of a control device 12 and a flow control device 22.
[Fig. 3]

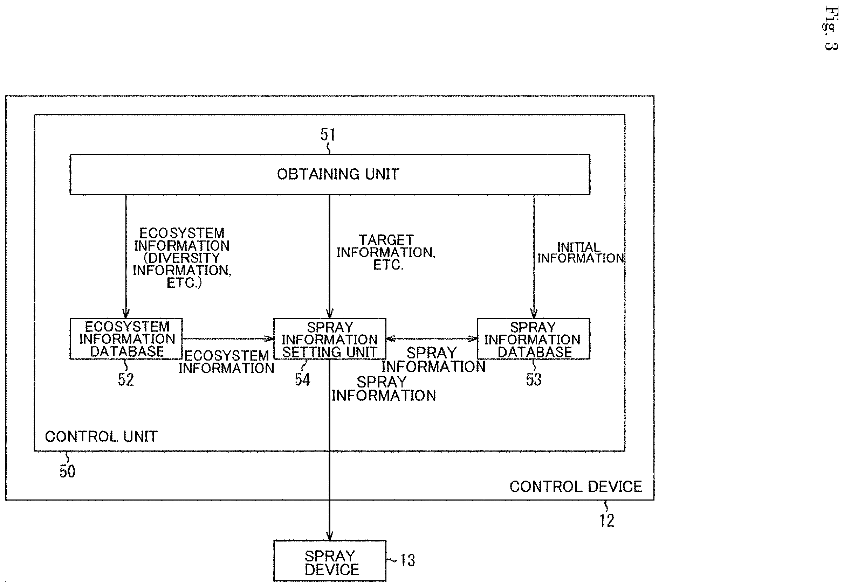

   Fig. 3 is a block diagram of an exemplary functional configuration of the control device 12 that functions as a spray control device that controls mist spraying as an information processing unit 32 executes a program.
[Fig. 4]

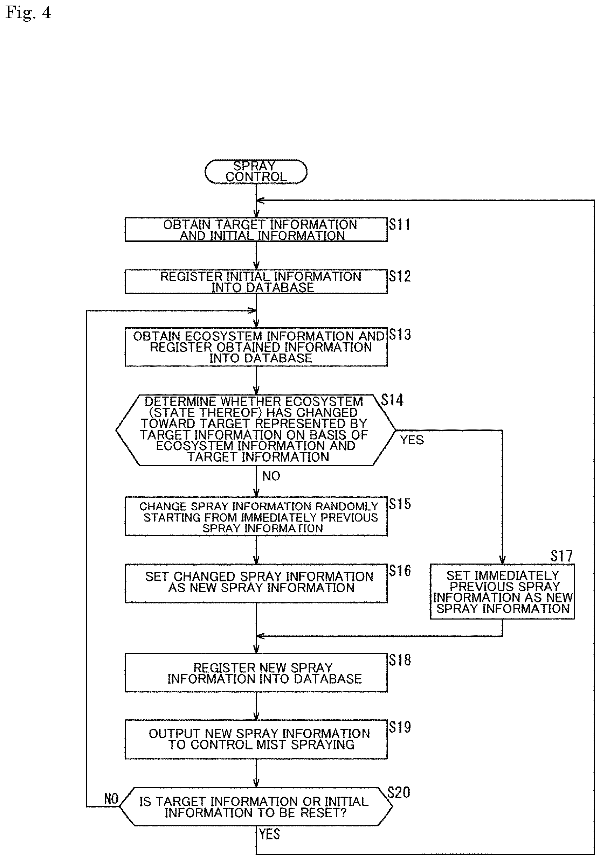

   Fig. 4 is a flowchart for illustrating an example of first processing in mist spray control by the control device 12.
[Fig. 5]

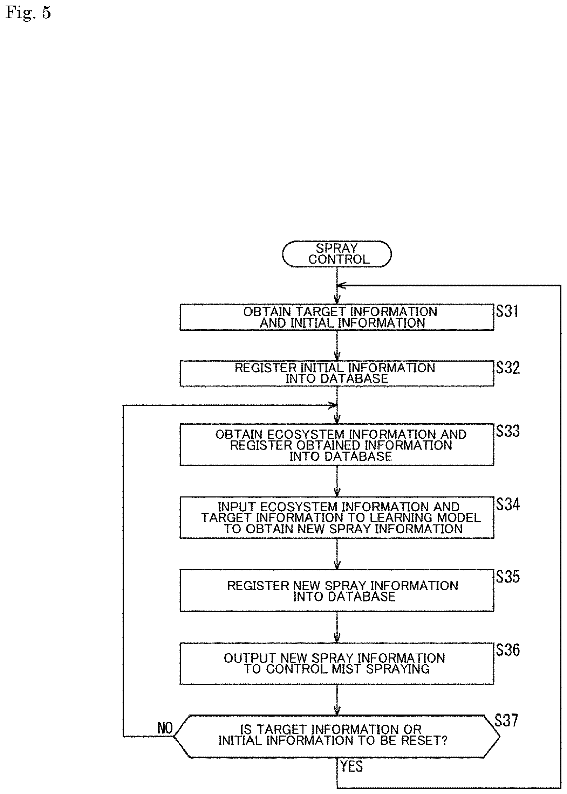

   Fig. 5 is a flowchart for illustrating an example of second processing in the mist spray control by the control device 12.
[Fig. 6]

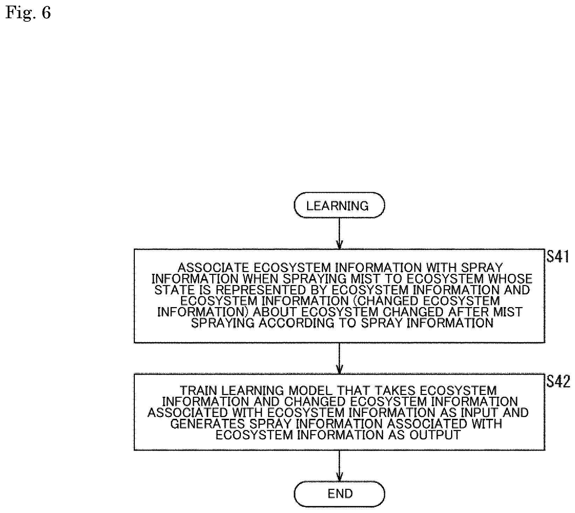

   Fig. 6 is a flowchart for illustrating an example of learning processing by a spray learning model.
[Fig. 7]

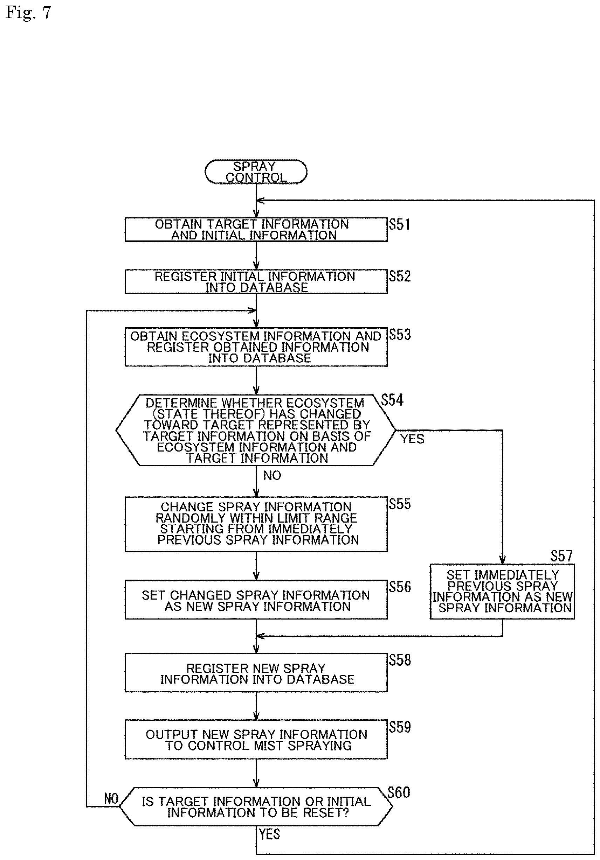

   Fig. 7 is a flowchart for illustrating an example of third processing in the mist spray control by the control device 12.
[Fig. 8]

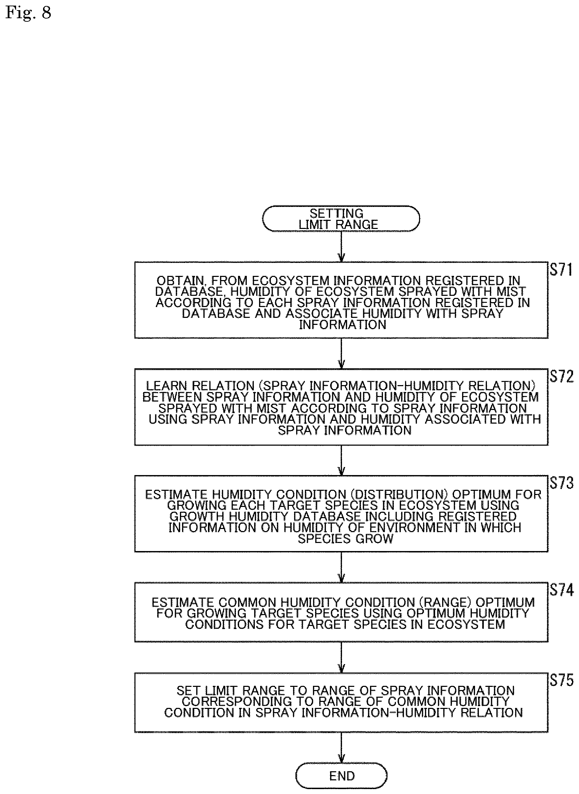

   Fig. 8 is a flowchart for illustrating an example of processing in setting a limit range.
[Fig. 9]

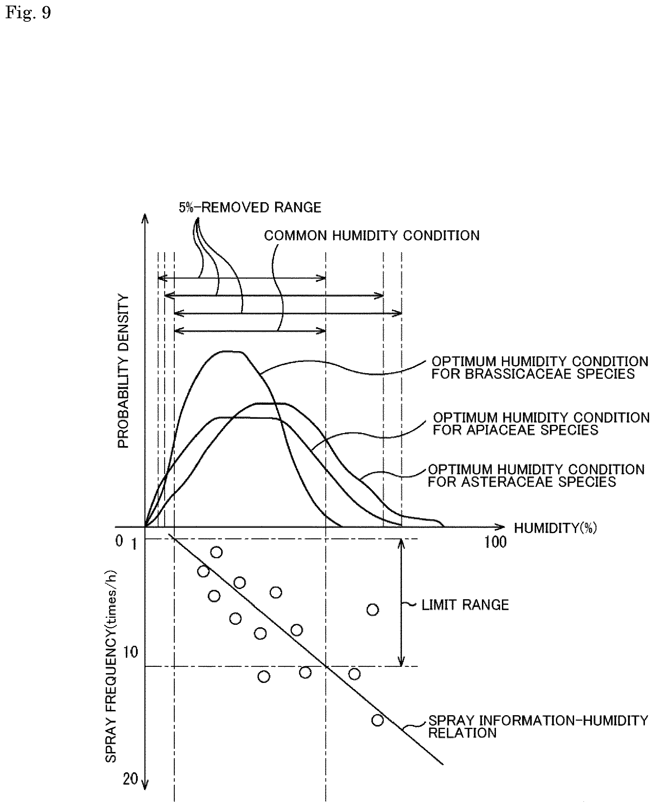

   Fig. 9 illustrates an example of how to set a limit range according to an optimum humidity condition for growing a target species.
[Fig. 10]

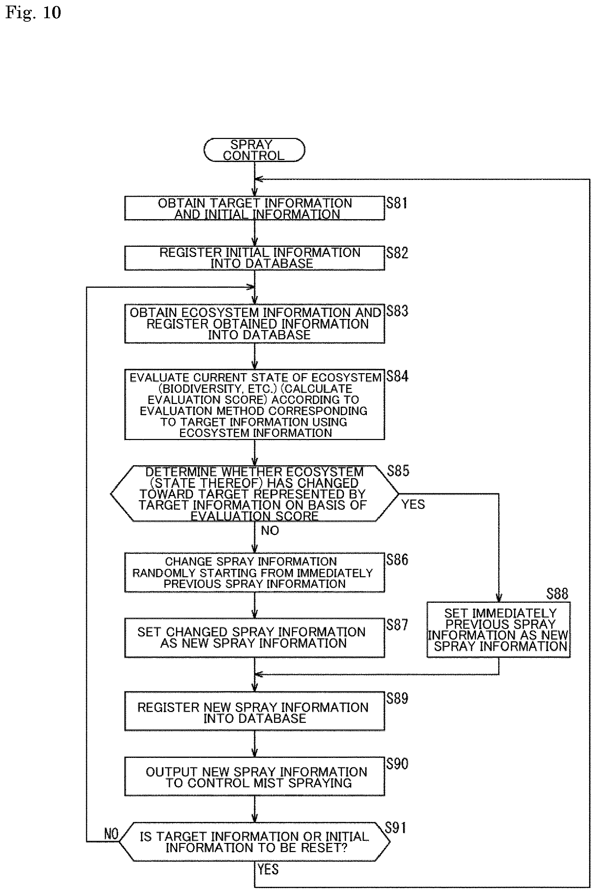

   Fig. 10 is a flowchart for illustrating an example of fourth processing in the mist spray control by the control device 12.
[Fig. 11]

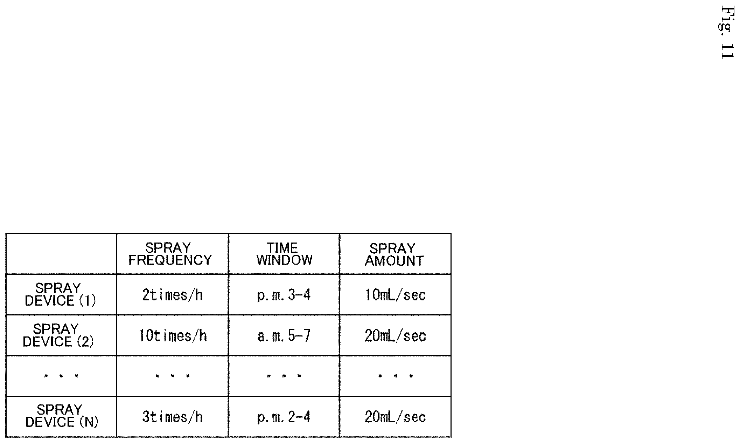

   Fig. 11 shows an example of spray information.
[Fig. 12]

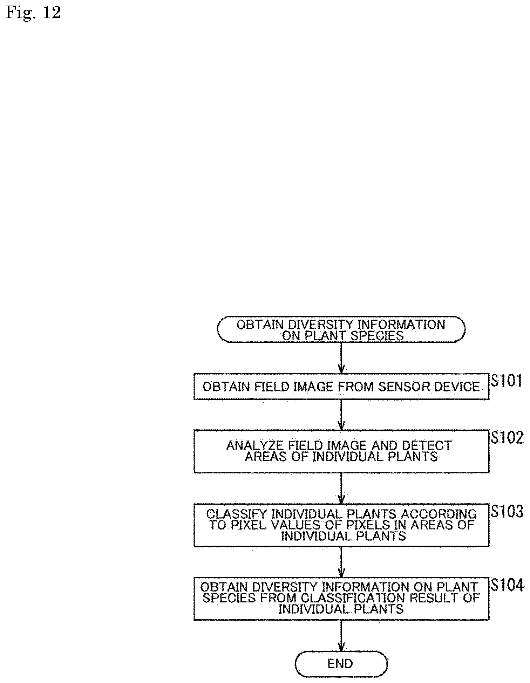

   Fig. 12 is a flowchart for illustrating an example of how to obtain diversity information about a plant species by an obtaining unit 51.
[Fig. 13]

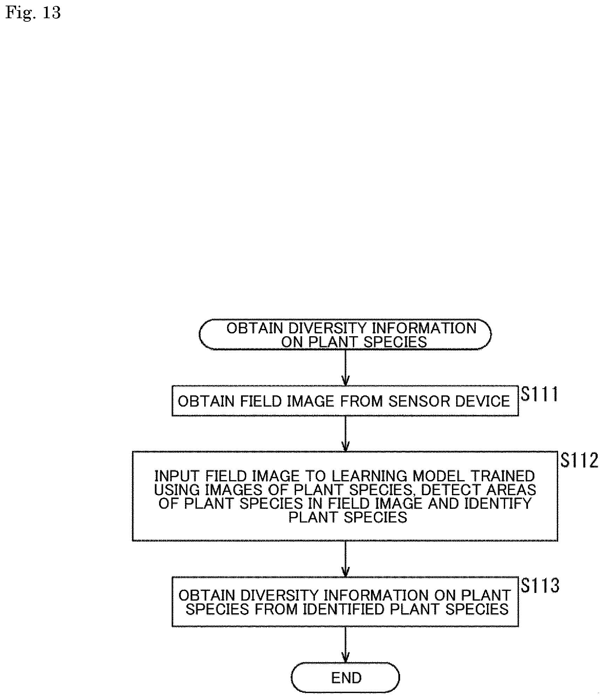

   Fig. 13 is a flowchart for illustrating another example of how diversity information about a plant species is obtained by the obtaining unit 51.
[Fig. 14]

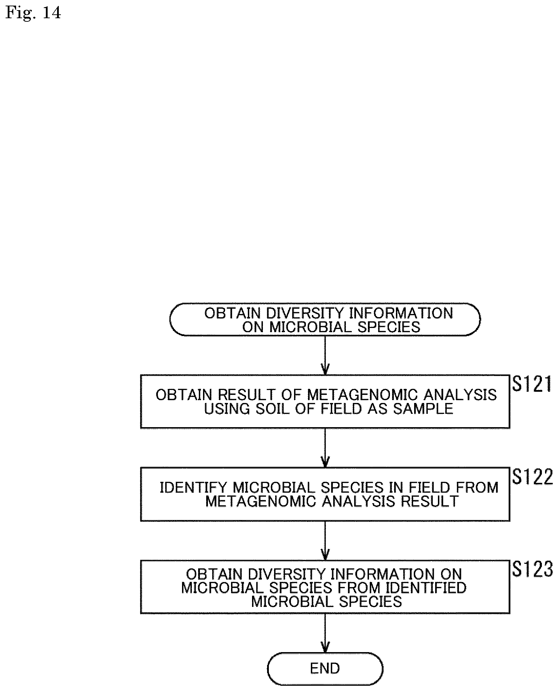

   Fig. 14 is a flowchart for illustrating an example of how to obtain diversity information about a microbial species by the obtaining unit 51.
[Fig. 15]

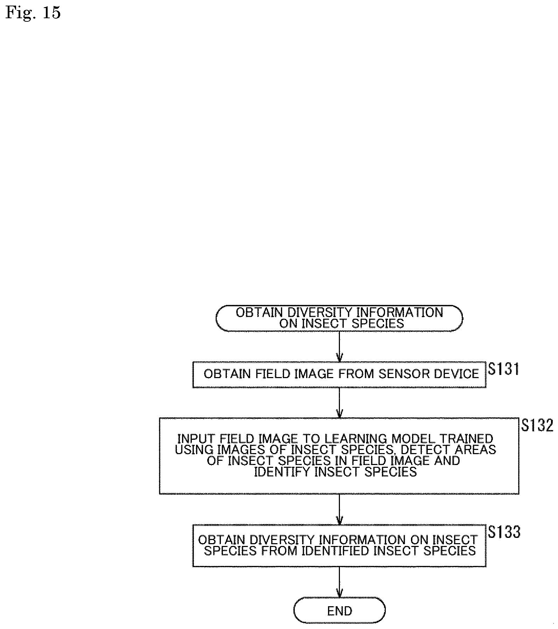

   Fig. 15 is a flowchart for illustrating an example of how to obtain diversity information about an insect species by the obtaining unit 51.
[Fig. 16]

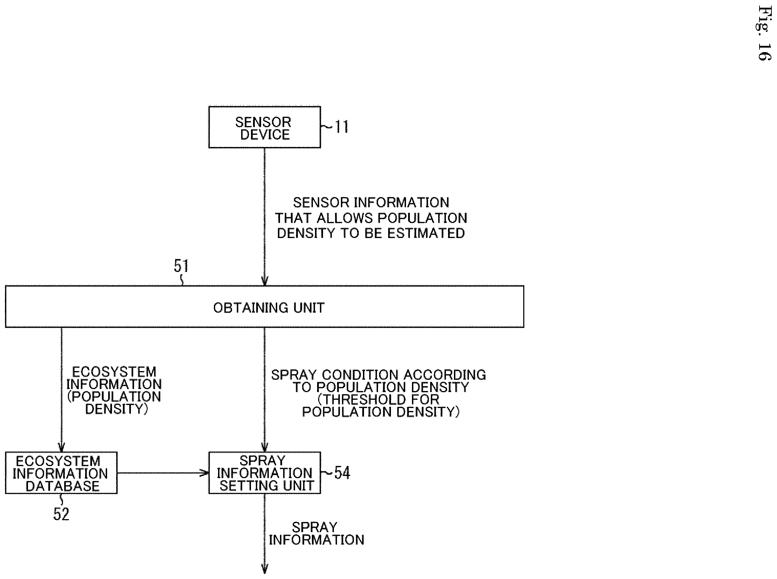

   Fig. 16 is a diagram for illustrating an outline of mist spray control according to population density.
[Fig. 17]

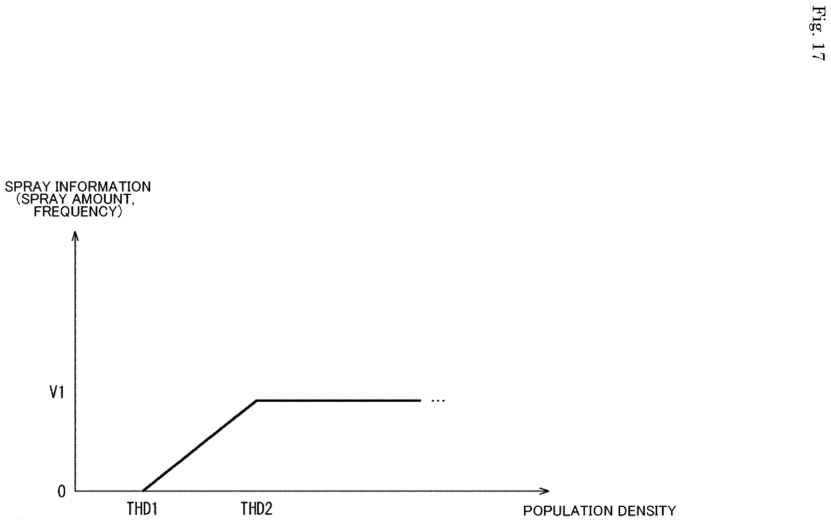

   Fig. 17 illustrates an example of how to set spray information according to population density.
[Fig. 18]

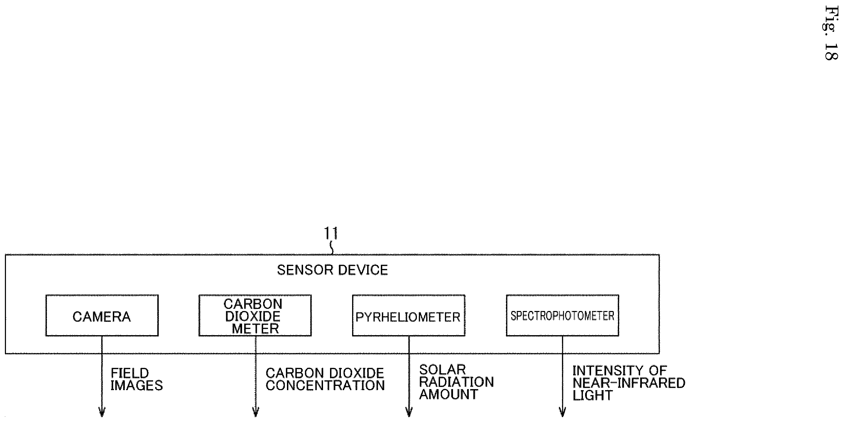

   Fig. 18 is a diagram for illustrating an exemplary configuration of a sensor device 11 when population density is estimated using a carbon dioxide concentration.
[Fig. 19]

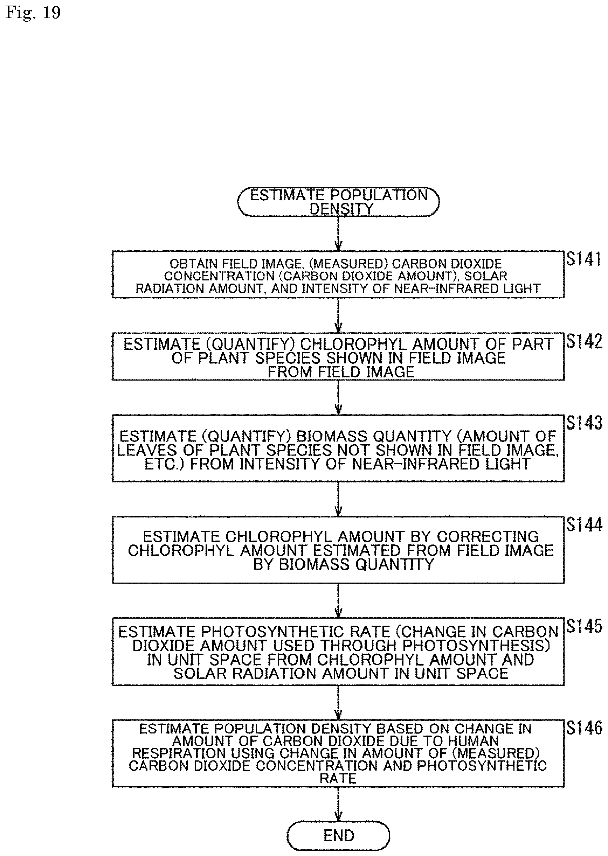

   Fig. 19 is a flowchart for illustrating an example of how to estimate population density using a measured carbon dioxide concentration and carbon dioxide used through photosynthesis by a plant species in a target field.
[Fig. 20]

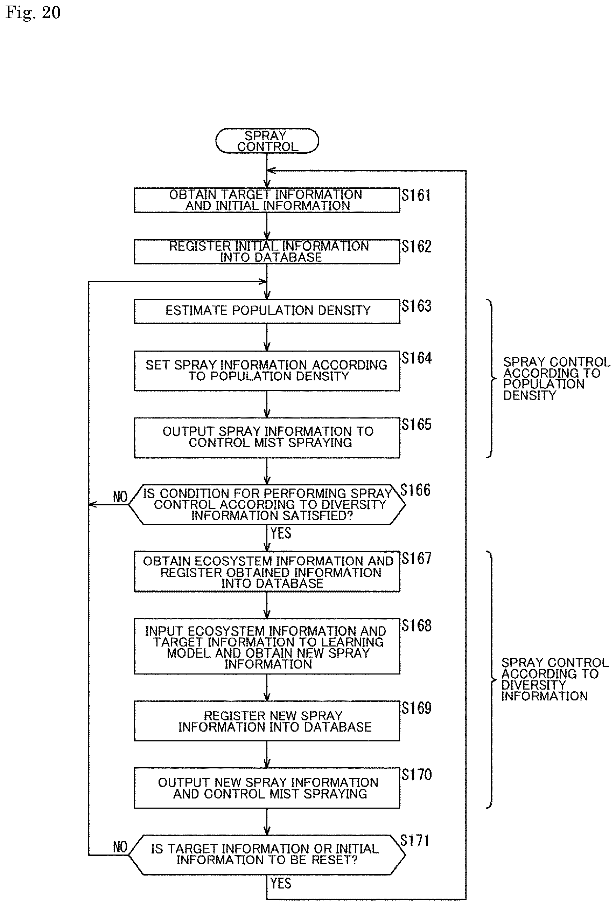

   Fig. 20 is a flowchart for illustrating an example of mist spray control according to both diversity information and population density.
[Fig. 21]

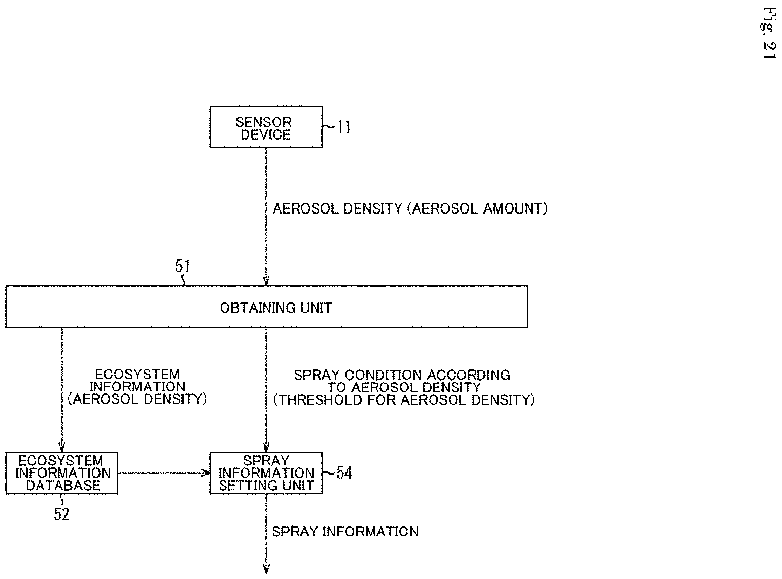

   Fig. 21 is a diagram for illustrating an outline of mist spray control according to an aerosol density.
[Fig. 22]

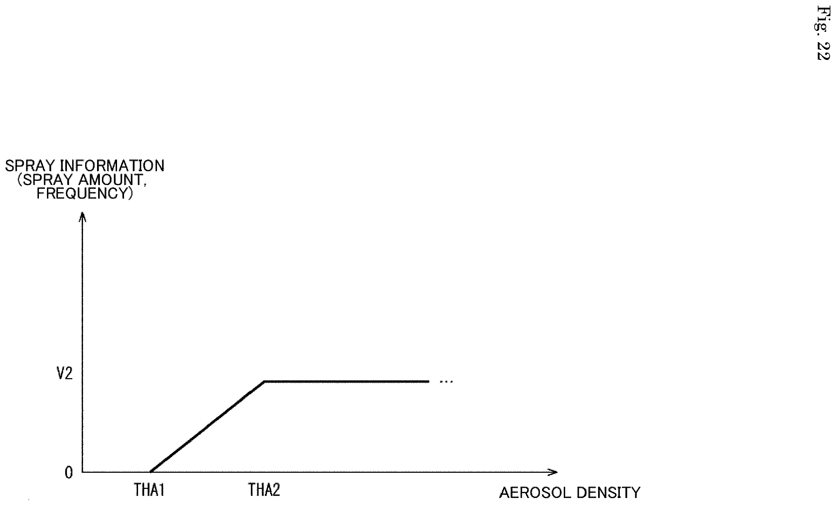

   Fig. 22 illustrates an example of how to set spray information according to an aerosol density.
[Fig. 23]

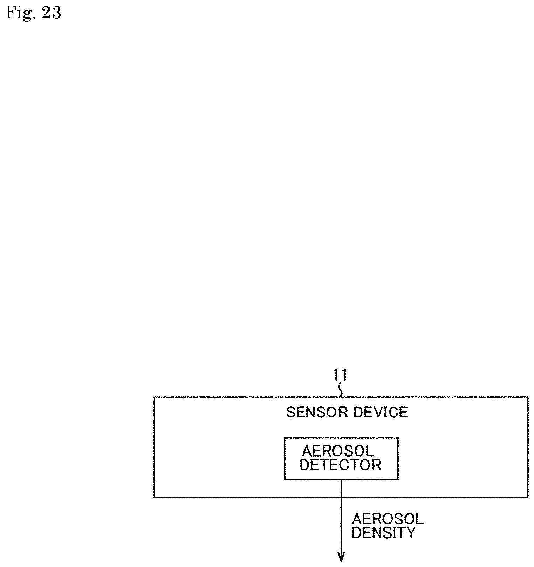

   Fig. 23 is a diagram of an exemplary configuration of the sensor device 11 that detects an aerosol density.
[Fig. 24]

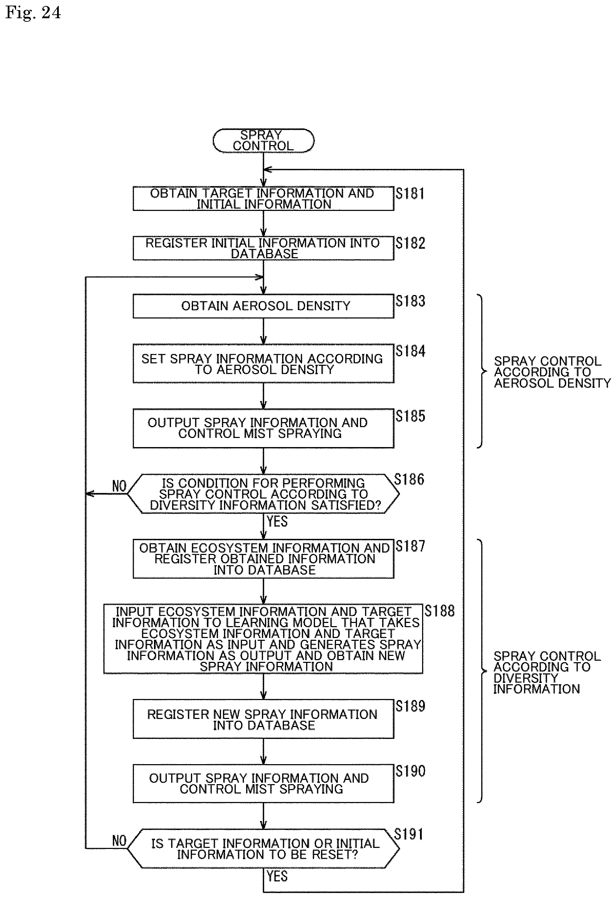

   Fig. 24 is a flowchart for illustrating an example of processing in mist spray control according to both diversity information and an aerosol density.
[Fig. 25]

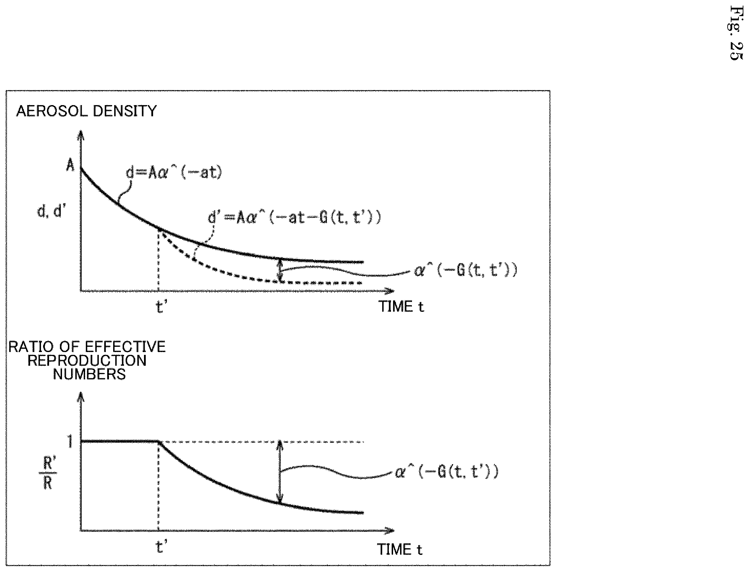

   Fig. 25 illustrates an aerosol density in a unit space and an effective reproduction number of an infectious disease by way of illustration.
[Fig. 26]

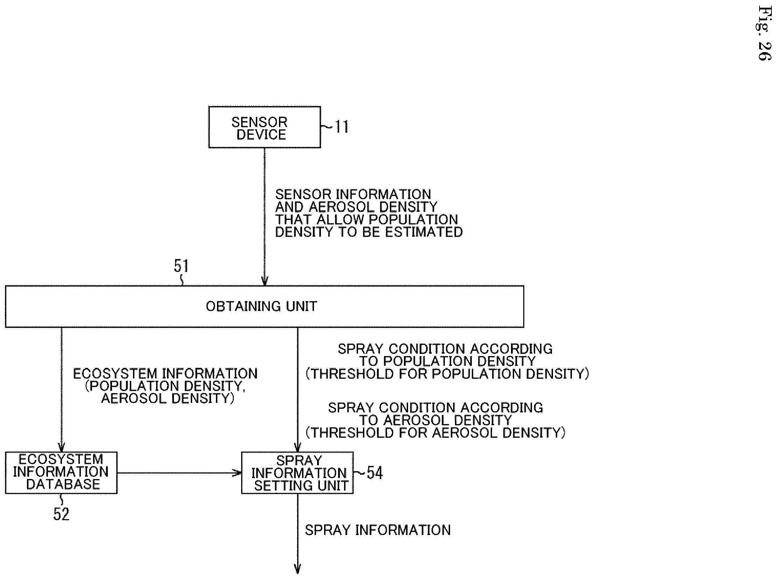

   Fig. 26 is a diagram for illustrating an outline of mist spray control according to population density and an aerosol density.
[Fig. 27]

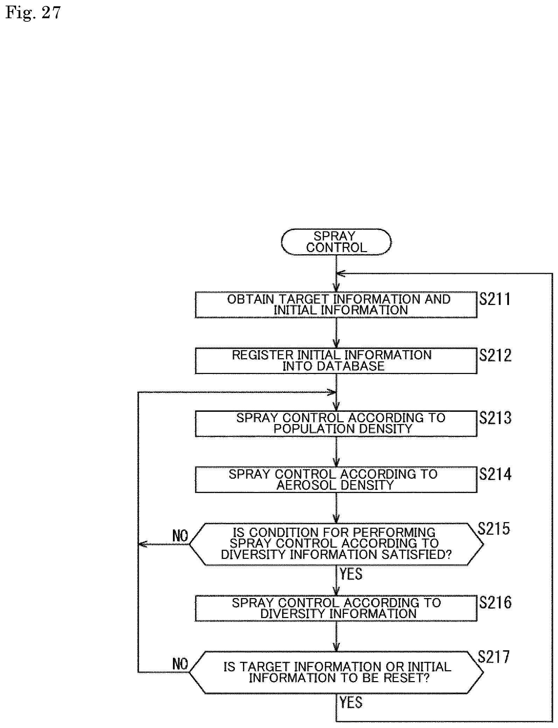

   Fig. 27 is a flowchart for illustrating processing in mist spray control according to diversity information and population density and an aerosol density.
[Fig. 28]

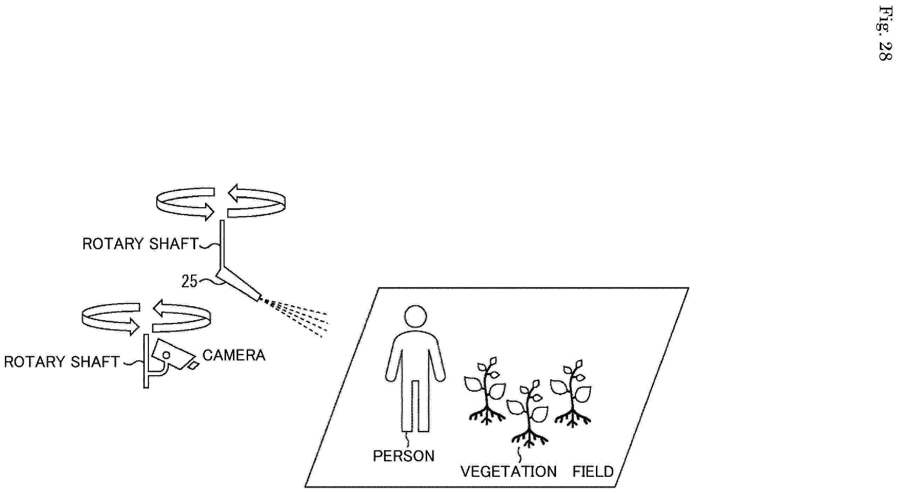

   Fig. 28 is a view for illustrating an example of how to mount (provide) the camera of the sensor device 11 and a nozzle 25 in the field.
[Fig. 29]

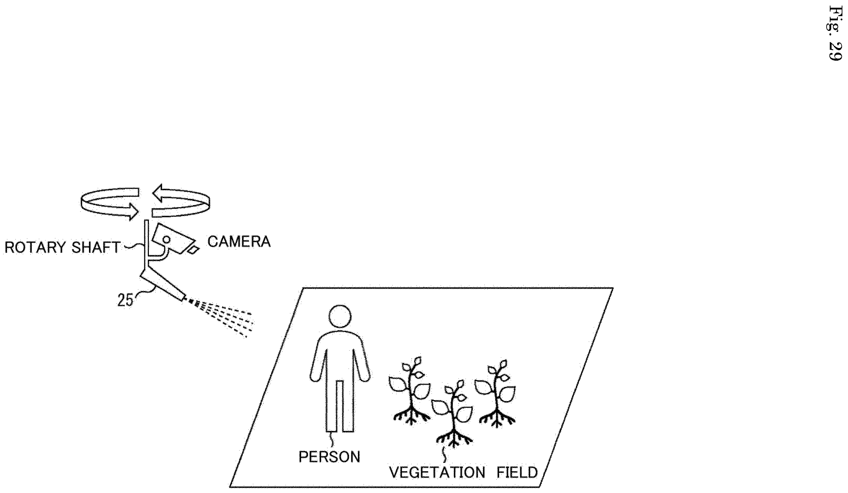

   Fig. 29 is a view for illustrating another example of how to mount (provide) the camera of the sensor device 11 and the nozzle 25 in the field.
[Fig. 30]

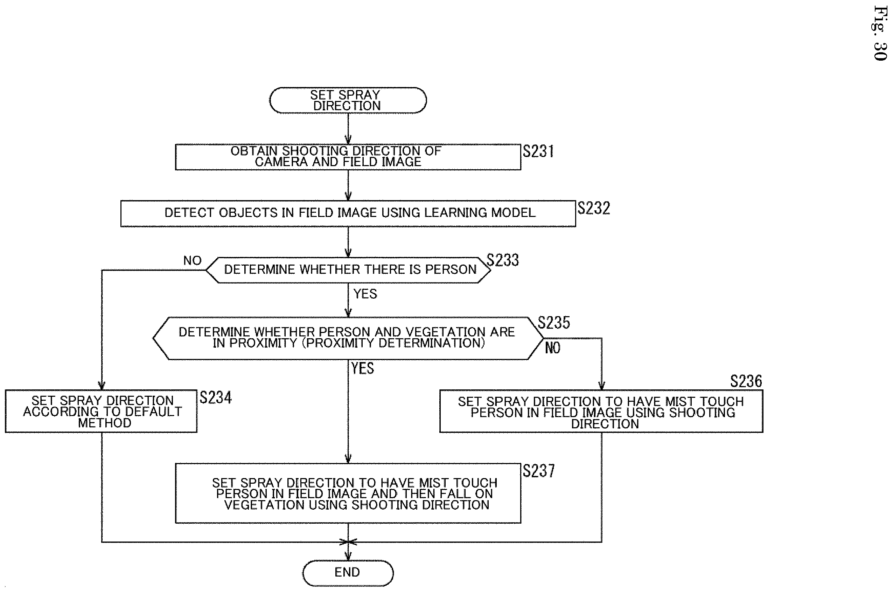

   Fig. 30 is a flowchart for illustrating an example of how to set a spray direction in spray information for spraying mist.
[Fig. 31]

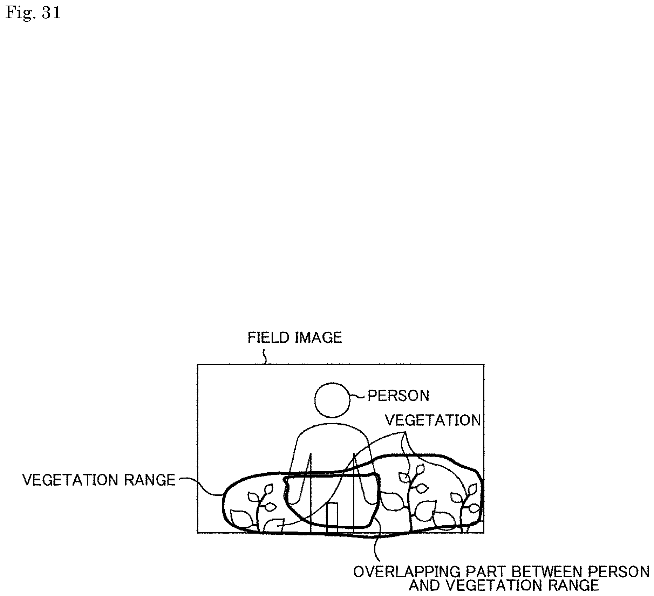

   Fig. 31 is a view for illustrating a proximity determination method in step S235.
[Fig. 32]

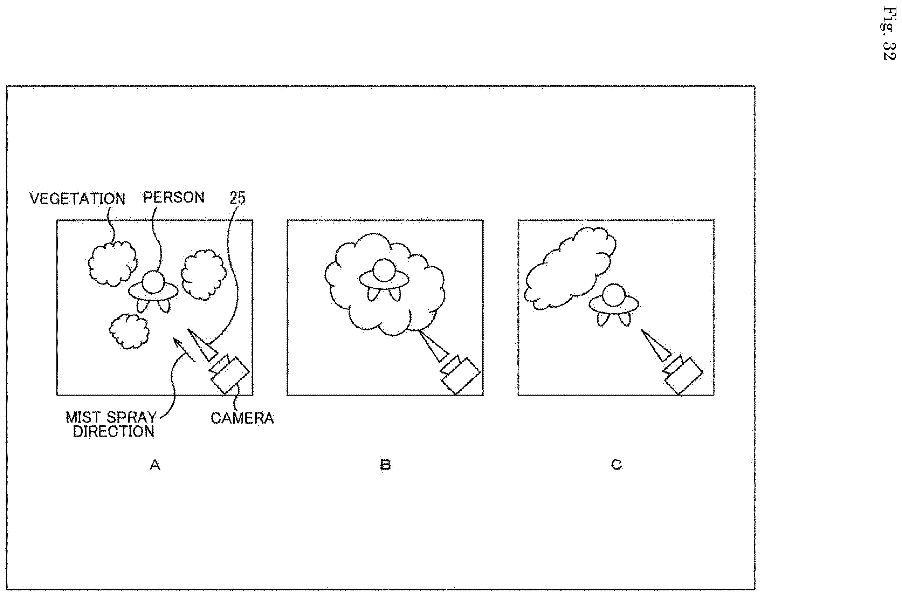

   Fig. 32 is a plan view of examples of mist spraying which is more effective in reducing the risk of aerosol transmission of infectious diseases.
[Fig. 33]

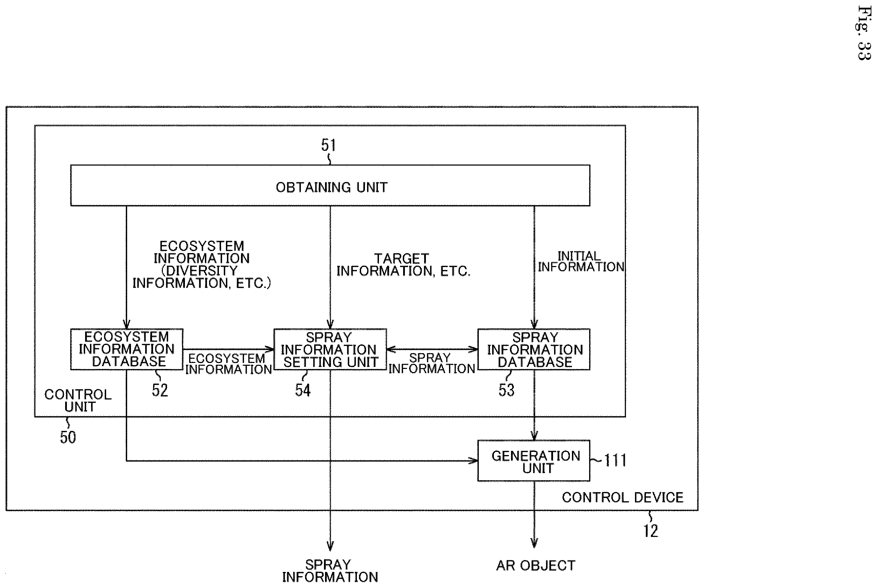

   Fig. 33 is a block diagram of another exemplary functional configuration of the control device 12.
[Fig. 34]

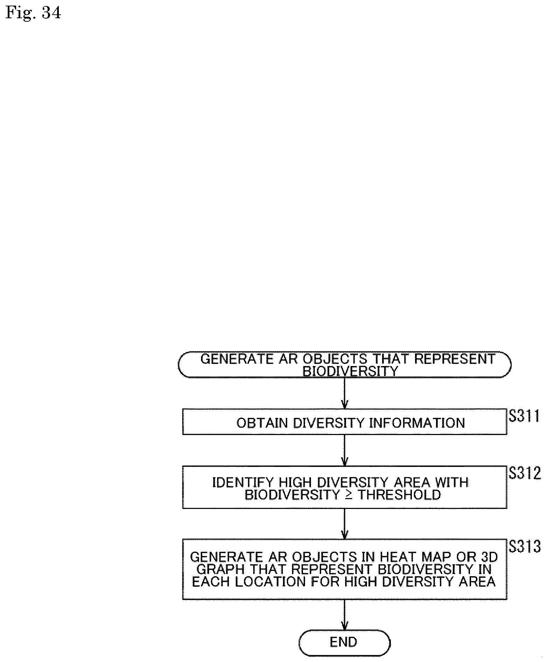

   Fig. 34 is a flowchart for illustrating an example of processing in generating an AR object that represents biodiversity by a generation unit 111.
[Fig. 35]

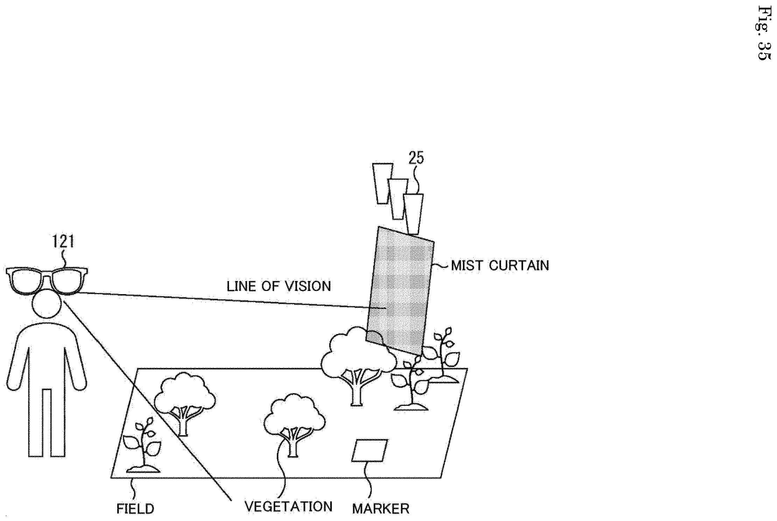

   Fig. 35 is a view of how a user may observe a target field.
[Fig. 36]

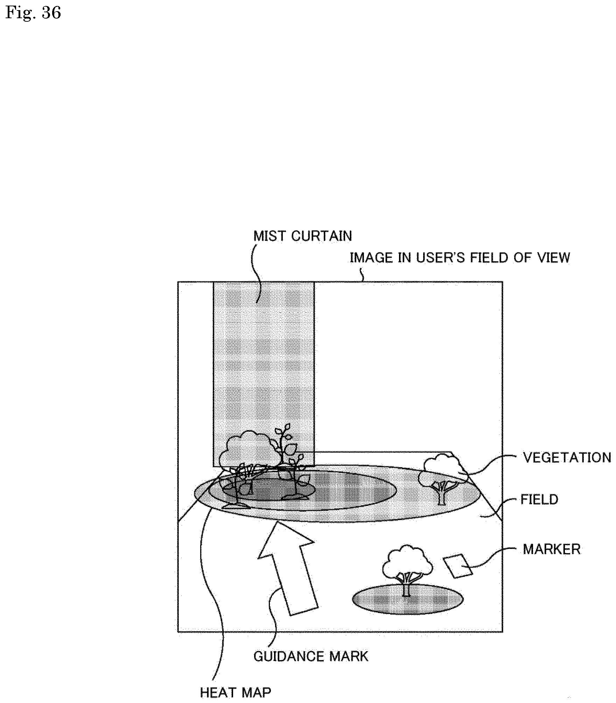

   Fig. 36 is a view of an example of an image in the field of view of a user through a pair of smart glasses as a terminal 121.
[Fig. 37]

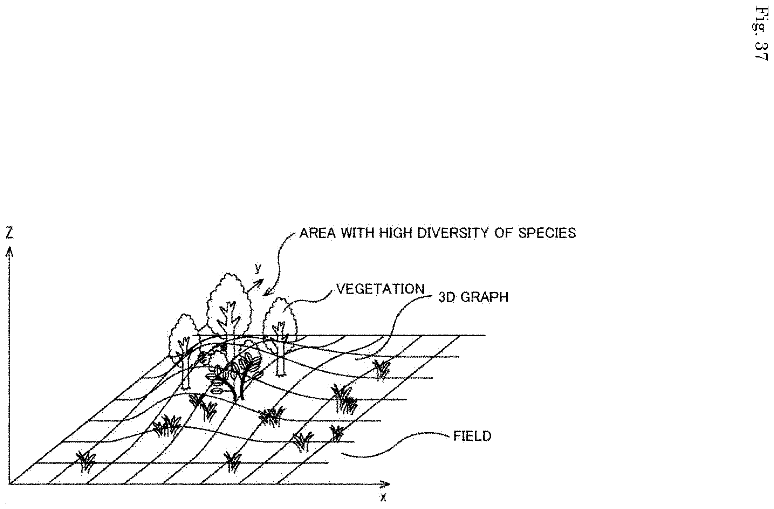

   Fig. 37 illustrates an exemplary three-dimensional graph that represents biodiversity as AR objects.

### [Description of Embodiments]

### <Spray System According to One Embodiment to Which Present Technology is Applied>

Fig. 1 illustrates an exemplary configuration of a spray system according to one embodiment to which the present technology is applied.

In Fig. 1, a spray system 10 includes a sensor device 11, a control device 12, and a spray device 13.

The sensor device 11 and the spray device 13 are provided in a field for example in a place where mist is sprayed. The control device 12 can be provided at any arbitrary location as the sensor device 11 or the spray device 13 is configured so that the control device 12 can communicate with the sensor device 11 and the spray device 13.

One or more of each of the sensor device 11 and the spray device 13 may be provided. In other words, the sensor devices 11 and the spray devices 13 can be provided at multiple locations in the field.

The sensor device 11 includes a camera that captures images by sensing light, a hygrometer that senses humidity, a thermometer that senses temperature, and various other necessary sensors. The sensor device 11 senses various physical quantities and supplies (transmits) sensor information such as images as the sensing results to the control device 12.

The control device 12 uses the sensor information from the sensor device 11 to control the spray device 13, thereby controlling the mist spraying onto the field by the spray device 13.

The control device 12 obtains, from the sensor information, ecosystem information that represents the state of an ecosystem including diversity information related to biodiversity of the ecosystem in the field.

The diversity information may include the biodiversity of species such as plant species, microbial species, and insect species, as well as the biodiversity of a species group such as vegetation, which is a grouping of multiple species. The vegetation refers to for example a group of one or more plant species having common characteristics such as shrubs and grasses when these species grow together.

In addition to the diversity information, the ecosystem information may include the species and habitat positions (locations) of plant species and others in the ecosystem, the temperature and humidity of the ecosystem, the biomass quantity in the ecosystem, population density, profiles indicating the condition of the soil in the ecosystem (for example, the pH and concentration of each ion as chemical indicators, and physical indicators such as soil hardness), numerical information quantifying the performance of any arbitrary ecosystem service, and other kinds of information indicating some state of the ecosystem.

As for information other than the ecosystem information that can be obtained using the sensor information, such as information obtained by analyzing actual samples of the soil for example at a specialized institution, the control device 12 can receive the result of analysis of the samples from the specialized institution through communication, or for example upon being notified of the analysis result from the specialized institution, an operator of the control device 12 can operate and input the analysis result to the device.

In addition to obtaining the ecosystem information, the control device 12 also obtains target information for example in response to operation of the control device 12 by the operator.

The target information is information related to the state of the ecosystem such as biodiversity, which is a target state of the ecosystem or information that represents a target state as the state of the ecosystem or information that represents a target change as a change in the state of the ecosystem.

The control device 12 controls mist spraying onto the field by the spray device 13 by controlling the spray device 13 according to the ecosystem information and the target information.

The spray device 13 has a tank 21, a flow control device 22, water pipes 23 and 24, and a nozzle 25.

The tank 21 stores liquid to be sprayed as mist. The liquid to be sprayed as a mist may be water or a solution containing a specific compound or a microorganism, such as a microbial activator containing organic matter and metal ions and a foliar spray type energizer.

For example, such a microbial activator containing organic matter and metal ions is for example disclosed JP 3656119B, and such a foliar spray-type energizer is disclosed for example in JP 5685515B.

The flow control device 22 controls the flow rate of the liquid supplied from the tank 21 to the nozzle 25 under the control of the control device 12.

The water pipe 23 connects the tank 21 and the flow control device 22, and the water pipe 24 connects the flow control device 22 and the nozzle 25. The liquid in the tank 21 is supplied to the nozzle 25 via the water pipe 23, the flow control device 22, and the water pipe 24.

The water pipes 23 and 24 can be pipes made of any material that can transport liquid, such as iron pipes, polyethylene pipes, and other hoses.

The nozzle 25 sprays the liquid supplied from the flow control device 22 via the water pipe 24 as mist. In mist spray control, the control device 12 can control the spray direction (spray position) in which the nozzle 25 sprays mist.

In Fig. 1, seedlings of one of each of Brassicaceae, Apiaceae, and Asteraceae are planted in the field, and the nozzle 25 is provided so that mist can be sprayed from above the plant species.

The nozzle 25 can also be provided on (near) the ground surface so that the mist can be blown up for example from under.

In the spray system 10, mist is sprayed by the spray device 13 provided in the field, but the mist can also be sprayed for example from a flying vehicle such as a drone or a moving body such as a vehicle. In this case, the control device 12 controls the moving body including control of mist spraying from the moving body.

In the spray system 10 configured as shown in Fig. 1, the sensor device 11 senses various physical quantities in the field and supplies sensor information as a result of sensing to the control device 12.

The control device 12 obtains ecosystem information for example from the sensor information from the sensor device 11. In addition, the control device 12 obtains target information in response to an operation of the control device 12 by the operator.

The control device 12 controls mist spraying on the field by the spray device 13 by controlling the spray device 13 according to the ecosystem information and the target information.

The spray device 13 sprays mist under the control of the control device 12.

For example, in the spray device 13, the flow control device 22 controls the flow rate of the liquid flowing from the tank 21 through the water pipe 23 under the control of the control device 12 and supplies the liquid after the flow rate control to the nozzle 25 through the water pipe 24.

As a result, the liquid supplied via the water pipe 24 is sprayed as mist from the nozzle 25. When the nozzle 25 has a function to adjust the spray direction (spray position) of the mist, the nozzle 25 adjusts the spray direction of the mist under the control of the control device 12.

Here, as scientific evidence that mist spraying in an (natural) ecosystem can control biodiversity, some study examples indicate that humidity changes affect biodiversity in ecosystems.

For example, references 1 and 2 below report several cases in which changes in precipitation that occur over short seasonal periods have a greater impact on biodiversity than changes that occur throughout the year.

Reference 1: Xia, Y, Moore, D. I., Collins, S. L., & Muldavin, E.H.(2010). Aboveground production and species richness of annuals in Chihuahuan Desert grassland and shrubland plant communities. J. Arid Environ. 74, pp. 378-385.

Reference 2: Giora J. Kidron, (2014). The negative effect of biocrusts upon annual-plant growth on sand dunes during extreme droughts. Journal of Hydrology. 508, pp. 128-136

Reference 3 in the following also mentions the scale of ecosystems susceptible to precipitation and reports that the biodiversity of smaller ecosystems is more likely to be affected by changes in precipitation. Therefore, it is expected that the effect of mist spraying on biodiversity can be increased by precisely controlling the manner of mist spraying temporally and spatially according to the scale of the ecosystem.

Reference 3: Korell, L., Auge, H., Chase, J. M., Harpole, W.S.& Knight, T.M.(2021). Responses of plant diversity to precipitation change are strongest at local spatial scales and in drylands. Nat. Commun. 12, 2489.

There is also scientific evidence that exposure to sprayed water alters the gene expression of individual biological organisms and physiological states based on gene expression such as metabolic reactions that occur downstream of gene expression. Therefore, it is expected that control of mist spraying can change the diversity of physiological states of individual organisms even within the same species.

For example, in plant species, growth patterns can change as an effect of water contact on individual organisms. For example, in the 1990s, the molecular mechanism is clarified as in the following reference 4 through analysis using a model organism such as Arabidopsis thaliana in a closed experimental system.

Reference 4: Braam, J. & Davis, R.W.(1990). Rain-, wind-, and touch-induced expression of calmodulin and calmodulin-related genes in Arabidopsis. Cell 60, pp. 357-364.

For example, in the 2010s, the following reference 5 indicates that jasmonic acid is involved in changes in growth patterns of plant species and that jasmonic acid is also involved in obtaining of pathogen tolerance. In recent years, regulatory paths at the genome level, such as the involvement of a transcription factor network downstream of MYC2/MYC3/MYC4 expression has become clear in jasmonic acid-mediated obtaining of pathogen tolerance.

Reference 5: Chehab, E. W., Yao, C., Henderson, Z., Kim, S. & Braam, J. (2012). Arabidopsis Touch-Induced Morphogenesis Is Jasmonate Mediated and Protects against Pests. Curr. Biol. 22, pp. 701-706.

In view of the findings, the spray system 10 sprays mist that changes the environment of an ecosystem so that the state of the ecosystem, for example biodiversity becomes desired biodiversity according to ecosystem information that represents the state of the ecosystem including diversity information related to biodiversity.

The environment in which desired biodiversity is achieved (hereinafter also referred to as the desired environment) can vary depending on the combination of plant species in vegetation and the transition stage of the vegetation. In the spray system 10, the desired environment is searched for by changing the environment by mist spraying, so that the realization of the desired biodiversity is assisted.

In other words, in the spray system 10, for example, information on desired biodiversity is set as target information on target biodiversity, and the manner of spraying mist is changed so that the biodiversity of the ecosystem approaches the biodiversity represented by the target information. This can change the environment to the desired environment and assist in achieving the desired biodiversity.

Furthermore, the spray system 10 assists in achieving the desired biodiversity as described, so that it can be expected that the biodiversity of the field is improved, and particularly the antimicrobial and antiviral functions are improved by increase in the species diversity (biodiversity) of the topsoil microbial flora.

According to the spray system 10, aerosols containing viruses and other substances suspended in the air can be adsorbed by mist and deposited on the topsoil. In this way, increase can be expected in the efficiency of the antimicrobial and antivirus functions of the topsoil microbial flora.

### <Exemplary Configuration of Control Device 12 and Flow Control Device 22>

Fig. 2 is a block diagram of an exemplary configuration of the control device 12 and the flow control device 22.

For example, the control device 12 may include a computer. The control device 12 has an input unit 31, an information processing unit 32, a memory 33, a recording drive 34, and an output unit 35. The input unit 31 to the output unit 35 are connected to each other via a bus and allowed to exchange information.

The input unit 31 is an I/F (interface) that accepts information from the outside. The input unit 31 includes an operation unit such as keyboard and a touch panel that accepts operations by the operator. The input unit 31 also includes an I/F such as a receiving unit that receives information from external devices such as a sensor device 11 and a device on the Internet (a server on the Internet) by communicating with the external devices according to a prescribed communication method.

The information processing unit 32 has a processor such as a CPU (central processing unit) or a DSP (digital signal processor) and performs various kinds of processing by reading a program recorded in the recording drive 34 into the memory 33 and executing the program.

The memory 33 stores information necessary for the information processing unit 32 to perform processing.

The recording drive 34 records programs executed by the information processing unit 32 and various other kinds of information. The recording drive 34 may include an SSD (solid state drive) or an HDD (hard disk drive).

The output unit 35 is an I/F that outputs information to the outside. The output unit 35 includes an I/F that transmits information to an external device, such as a display and a speaker that presents information to the operator and others by displaying images and outputting sound and a transmission unit that transmits information to an external device by communicating with the external device according to a prescribed communication method.

The control device 12 having the above-described configuration functions as a spray control device that controls mist spraying as the information processing unit 32 executes a program.

The program executed by the information processing unit 32 can be installed into the computer as the control device 12 from a removable recording medium such as a DVD (digital versatile disc) or a memory card. The program can also be downloaded to the computer as the control device 12 over a network such as the Internet and installed in the recording drive 34.

The flow control device 22 has a pump control unit 41 and a pump 42.

The pump control unit 41 controls (drives) the pump 42 under the control of the control device 12, e.g., according to information supplied (transmitted) from the output unit 35 to control the flow rate of liquid transferred from the water pipe 23 to the water pipe 24 and then to the nozzle 25.

The pump 42 transfers the liquid from the water pipe 23 to the water pipe 24 at a flow rate controlled by the pump control unit 41.

<Exemplary Functional Configuration of Control Device 12>

Fig. 3 is a block diagram of an exemplary functional configuration of the control device 12 which functions as a spray control device that controls mist spraying as the information processing unit 32 executes a program.

In Fig. 3, the control device 12 has a control unit 50.

The control unit 50 obtains ecosystem information including diversity information and target information about a target ecosystem including information about target biodiversity, and controls mist spraying on the ecosystem (mist spray control) according to the ecosystem information and the target information.

The control unit 50 has an obtaining unit 51, an ecosystem information database 52, a spray information database 53, and a spray information setting unit 54.

The obtaining unit 51 obtains various kinds of information using information received by the input unit 31 as the operator operates the input unit 31 or the input unit 31 communicates with the sensor device 11 or an external device on the Internet.

The obtaining unit 51 obtains the target information and initial information, for example, in response to an operation of the input unit 31 by the operator.

The initial information is the initial value of the spray information. The spray information indicates how mist is sprayed and includes for example at least one of a spray frequency, a spray amount, a time window, and a spray direction (spray position).

The obtaining unit 51 obtains ecosystem information including for example diversity information about the ecosystem of a field to be sprayed with mist from sensor information from the sensor device 11. Diversity information included in the ecosystem information obtained by the obtaining unit 51 may include information on biodiversity including at least one of various species such as plant species, microbial species, and insect species. The biodiversity of plant species and insect species can be obtained, for example, by recognizing plant species and insect species using images taken of the field by the camera of the sensor device 11.

The obtaining unit 51 supplies the ecosystem information to the ecosystem information database 52 for registration (storage). The obtaining unit 51 also supplies and registers the initial information to the spray information database 53. Furthermore, the obtaining unit 51 supplies the spray information setting unit 54 with the target information and other kinds of information necessary for processing by the spray information setting unit 54.

The ecosystem information database 52 stores the ecosystem information from the obtaining unit 51.

The spray information database 53 stores the spray information as the initial information from the obtaining unit 51 and the spray information supplied by the spray information setting unit 54.

The spray information setting unit 54 sets new spray information according to the target information from the obtaining unit 51 and the ecosystem information stored in the ecosystem information database 52 and supplies the information to the spray device 13 and the spray information database 53. The spray information setting unit 54 can use the spray information stored in the spray information database 53 to set new spray information.

### <Mist Spray Control by Control Device 12>

Fig. 4 is a flowchart for illustrating an example of first processing in mist spray control by the control device 12.

In step S11, the obtaining unit 51 obtains target information and initial information on biodiversity, and the process proceeds to step S12.

For example, the obtaining unit 51 obtains the target information in response to an operation by the operator. The operator can input the target information, for example, to improve biodiversity with time-series changes or to maintain the biodiversity at least at a certain level by operating the input unit 31.

For example, the obtaining unit 51 obtains initial information as spray information that represents a spray frequency, a spray amount, a time window, and a spray direction in response to an operation by the operator. By operating the input unit 31, the operator can input the initial information as spray information that indicates a spray frequency such as once every hour.

In step S12, the obtaining unit 51 registers the initial information as spray information in the spray information database 53, and the process proceeds to step S13.

In step S13, the obtaining unit 51 obtains ecosystem information including diversity information about an ecosystem (target ecosystem) to be sprayed with mist, in other words, the ecosystem (target ecosystem) of a field to be sprayed with mist. The obtaining unit 51 also registers the ecosystem information in the ecosystem information database 52, and the process proceeds to step S14.

In step S14, the spray information setting unit 54 determines whether the target ecosystem (the state thereof) has changed toward the target represented by the target information, using the target information and the ecosystem information in the ecosystem information database 52. In other words, the latest ecosystem information in the ecosystem information database 52 is compared with the previous ecosystem information to determine whether the ecosystem has changed toward the target represented by the target information.

If it is determined in step S14 that the target ecosystem has not changed toward the target represented by the target information, the process proceeds to step S15.

In step S15, the spray information setting unit 54 randomly changes the spray information starting from the immediately previous spray information, i.e., the latest spray information registered in the spray information database 53 and the process proceeds to step S16.

In step S15 (or step S17), which is the first step after registration of initial information in the spray information database 53, the immediately previous spray information is the initial information.

Here, in the random change of spray information, all items such as the spray frequency, spray amount, time window, and spray direction represented by the spray information may be changed randomly or only one or more items selected randomly from all these items may be changed randomly.

When the spray system 10 has a plurality of spray devices 13, the spray information includes designation of the spray device 13 to spray mist among the plurality of mist spray devices 13. In the random change of spray information, the designation of the spray device 13 to spray mist among the plurality of spray devices 13 can be changed randomly.

In step S16, the spray information setting unit 54 sets the changed spray information as new spray information, and the process proceeds to step S18.

Meanwhile, if it is determined in step S14 that the target ecosystem has changed toward the target represented by the target information, the process proceeds to step S17.

In step S17, the spray information setting unit 54 sets the immediately previous spray information as new spray information, and the process proceeds to step S18.

In step S18, the spray information setting unit 54 registers the new spray information in the spray information database 53, and the process proceeds to step S19.

In step S19, the spray information setting unit 54 outputs (supplies) the new spray information to the spray device 13 to control mist spraying so that the spray device 13 sprays mist according to the new spray information, and the process proceeds to step S20.

Here, the processing from steps S13 to S19 can be performed at preset intervals.

The processing from the registration of ecosystem information to the ecosystem information database 52 in step S13 to step S19 can be performed when the ecosystem information obtained in step S13 has changed from the ecosystem information previously registered in the ecosystem information database 52.

In step S20, the control unit 50 determines whether to reset the target information or the initial information.

If it is determined in step S20 that the target information or the initial information is not to be reset, for example, if the operator does not perform an operation to reset the target information or the initial information, the process returns to step S13, and the same processing is repeated.

Meanwhile, if it is determined in step S20 that the target information or the initial information is to be reset, for example, if the operator performs an operation to reset the target information or the initial information, the process stands by for the operator to operate to input new target information or new initial information and then returns to step S11, and the same processing is repeated.

If the operator operates to input new target information, the new target information is used in the subsequent processing. If the operator operates to input new initial information, the spray information is reset to the new initial information in the subsequent processing.

In Fig. 4, steps S11 to S15 correspond to a learning phase for spray control, and steps S16 to S20 correspond to an execution phase for performing spray control.

For example, assume that to increase the biodiversity of plant species beyond the current level is set (input) as target information on biodiversity.

In addition, the ratio (percentage) of the area occupied by each plant species to the area occupied by all plant species in a field image which is an image of the target field taken from above such as an overhead image of the target field, is defined as the coverage of the plant species.

The number of plant species with a coverage greater than 0% is used as diversity information (information related to biodiversity) about the plant species.

For example, as shown in Fig. 1, the biodiversity of (diversity information about) plant species in the target ecosystem immediately after planting three plant species (Brassicaceae, Apiaceae, and Asteraceae) in the target field is three.

According to the first processing in spray control, mist is first sprayed onto the field according to initial information. If the biodiversity of the plant species immediately after planting the three plant species has been unchanged, the mist spraying continues according to the initial information because the target ecosystem has changed toward the target represented by the target information, which is to increase the biodiversity of the plant species to the current three species or more.

While the mist spraying according to the initial information continues, if for example the growth rates of two plant species, Brassicaceae and Apiaceae are particularly high, and the value obtained by adding the coverages of these two plant species is 100%, the biodiversity of the plant species in the target ecosystem decreases from three to two.

The decrease in the biodiversity of the plant species in the target ecosystem from three to two means that the target ecosystem has not changed toward the target represented by the target information, which is to increase the biodiversity of plant species to (the current) three species or more.

Therefore, in the first processing in the spray control, the spray information is changed randomly, starting from the immediately previous spray information.

In this case, the immediately previous spray information is the initial information, and if for example the initial information indicates that the spray frequency is once every hour, the spray frequency is changed slightly from once every hour. For example, the spray frequency is slightly changed (reduced) from once every hour to once every two hours.

The changed spray information is set as new spray information, and the mist is then sprayed according to the new spray information.

If the biodiversity of two plant species has not changed after the start of the mist spraying according to the new spray information, the target ecosystem has not changed toward the target represented by the target information, which is to increase the biodiversity of plant species to three or more. Therefore, the spray information is again changed randomly.

After the start of spraying according to the new spray information, if the biodiversity of the plant species exceeds 2, the target ecosystem has changed toward the target represented by the target information, which is to increase the biodiversity of plant species to three or more, and the mist spraying according to the new spray information is continued.

If the mist spraying according to the new spray information decreases the growth rate of Brassica and Apiaceae plant species and increases the growth rate of Asteraceae plant species, so that the coverage of Brassica, Apiaceae, and Asteraceae plant species all become larger than 0% (e.g., 60%, 20%, and 20%, respectively) and the plant species biodiversity becomes three, the mist spraying according to the new spray information is continued.

Therefore, the first processing in spray control can assist in achieving the desired biodiversity, i.e., the biodiversity represented by the target information by controlling the mist spray on the ecosystem according to the ecosystem information including diversity information and the target information related to the target biodiversity.

For example, according to the first processing in the spray control, certain plant species can be prevented from dominantly growing in certain vegetation in the target ecosystem and the environment can be adjusted in a variable manner as required so that a wide variety of plant species can be expressed, which can assist in achieving the biodiversity represented by the target information.

According to the first processing in the spray control, if the target ecosystem has not changed toward the target represented by the target information, for example when the biodiversity has not changed or when an unwanted change has occurred, the spray information (how to spray mist) is randomly changed. In this way, for example for vegetation about which how to spray mist to improve the biodiversity of the plant species has not been known, appropriate manner of spraying, i.e., spray information that can improve the biodiversity (of the plant species) can be searched for.

The ecosystem information also includes diversity information which includes information on the biodiversity of species such as plant species, microbial species, and insect species.

Therefore, by setting, as target information, information that represents an increase in the diversity of species such as plant species, soil microbial species, and insect species is set, mist spraying can be performed so that the target field environment is formed with greater diversity of the species such as the plant species, the soil microbial species, the insect species and greater diversity of niches.

Fig. 5 is a flowchart for illustrating an example of second processing in mist spray control by the control device 12.

According to the first processing in the spray control shown in Fig. 4, the ecosystem information database 52 and the spray information database 53 register ecosystem information and spray information, respectively, in time series.

The time-series ecosystem information is ecosystem information that represents various states of the ecosystem and is also ecosystem information that represents each state of the ecosystem after a change (post-change ecosystem information) in the state of the ecosystem in response to mist spraying performed according to the spray information registered in the spray information database 53 on the ecosystem whose state is represented by the ecosystem information.

For example, as shown in Fig. 4, when three plant species (Brassicaceae, Apiaceae, and Asteraceae) are planted in a target field, and mist is continuously sprayed at a frequency of once per hour, resulting in an added coverage of 100% for the two plant kinds, Brassicaceae and Apiaceae, and the biodiversity of the plant species in the target field changes from the three kinds, Brassicaceae, Apiaceae, and Asteraceae to the two kinds, Brassicaceae and Apiaceae, the ecosystem information database 52 registers first ecosystem information including diversity information indicating that the biodiversity of plant species is three kinds, Brassicaceae, Apiaceae, and Asteraceae, and second ecosystem information that includes diversity information indicating that the biodiversity of the plant species is two kinds, Brassicaceae and Apiaceae in the time-series order.

In this case, the second ecosystem information, which is later in the time-series order, is post-change ecosystem information that represents the state of the ecosystem after the state change due to the mist spraying at a frequency of once per hour on the ecosystem whose state is represented by the first ecosystem information, which is earlier in the time-series order.

According to the time-series ecosystem information, such as the first ecosystem information and the second ecosystem information, information on changes in the ecosystem due to mist spraying can be obtained. For example, according to the first and second time-series ecosystem information, when mist is sprayed at a frequency of once per hour, information on a change in the ecosystem can be obtained, such as a decrease in the biodiversity of plant species by one.

As the first processing in the spray control proceeds, the ecosystem information database 52 and the spray information database 53 accumulate, for various ecosystem information, spray information when mist is sprayed on the ecosystem whose state is represented by the ecosystem information, and post-change ecosystem information that represents the state of the ecosystem changed after spraying mist according to the spray information.

In this case, the ecosystem information is associated with the spray information at the time of spraying mist on the ecosystem whose state is represented by the ecosystem information and the post-change ecosystem information that represents the state of the ecosystem changed after the mist spraying according to the spray information, and a learning model is (machine-) trained with the ecosystem information and the post-change ecosystem information associated with the ecosystem information as input to generate the spray information associated with the ecosystem information as output, which makes it possible to obtain a learning model that outputs spray information that represents how to spray mist to change the ecosystem (state) represented by the ecosystem information into the ecosystem represented by the post-change ecosystem information.

The learning model, also referred to as a spray learning model, may be provided, as input, with ecosystem information including diversity information that represents the current ecosystem and ecosystem information that represents desired biodiversity as post-change ecosystem information, i.e., target information related to target biodiversity, so that the model can output spray information that changes the biodiversity of the current ecosystem into biodiversity represented by the target information.

In second processing in spray control, the spray information is obtained (set) using the spray learning model in this manner.

The spray learning model is trained using ecosystem information and spray information stored in the ecosystem information database 52 and the spray information database 53 as a result of the first processing in the spray control or similar information registered in an external database if available.

In the second processing in the spray control, in steps S31 to S33, the same processing as steps S11 to S13 in Fig. 4 is performed, and the process proceeds to step S34.

In step S34, the spray information setting unit 54 obtains new spray information using the spray learning model, and the process proceeds to step S35.

In other words, the spray information setting unit 54 inputs target information and the latest ecosystem information from the ecosystem information database 52 to the spray learning model and sets spray information to be output by the spray learning model as new spray information.

If the spray learning model has been properly trained, the spray information output by the spray learning model represents an appropriate manner of spraying mist to change biodiversity represented by the diversity information in the latest ecosystem information toward the biodiversity represented by the target information.

In steps S35 to S37, the same processing as steps S18 to S20 in Fig. 4 is performed.

Fig. 6 is a flowchart for illustrating an example of learning processing by the spray learning model.

The spray learning model can be trained for example in parallel with the second processing in the spray control, at prescribed intervals, upon registration of different ecosystem information from the previous time in the ecosystem information database 52, or at any other arbitrary timing.

In step S41, the spray information setting unit 54 associates each ecosystem information registered in the ecosystem information database 52 with spray information registered in the spray information database 53 obtained upon spraying mist on the ecosystem represented by the ecosystem information.

The spray information setting unit 54 also associates each ecosystem information registered in the ecosystem information database 52 with post-change ecosystem information that represents the state of the ecosystem changed after mist spraying according to spray information associated with the ecosystem information. The process then proceeds from step S41 to step S42.

In step S42, the spray information setting unit 54 machine-trains the spray learning model using, as input, the ecosystem information registered in the ecosystem information database 52 and the post-change ecosystem information associated with that ecosystem information to generate the spray information associated with that ecosystem information as output, and the process ends.

For the second processing in the spray control, steps S31 to S33 in Fig. 5 and the learning processing in Fig. 6 are the learning phase for spray control, and steps S34 to S37 in Fig. 5 are the execution phase in which spray control is executed.

The second processing in the spray control can assist in achieving the desired biodiversity, i.e., the biodiversity represented by the target information similarly to the first processing in the spray control.

Furthermore, according to the second processing in the spray control, the spray information to be set can be limited on the basis of findings in the past and setting of spray information that is far outside the optimum range of mist spraying for achieving the biodiversity represented by the target information can be prevented.

In other words, according to second processing in the spray control, the spray information is obtained by inputting the target information and the ecosystem information on the current ecosystem to the spray learning model trained using the ecosystem information stored in the ecosystem information database 52 and the spray information database 53 as findings in the past. Therefore, compared to the case where the spray information is randomly changed as in the first processing in the spray control, it is less likely that the obtained spray information is far from the optimum range of mist spraying to achieve the biodiversity represented by the target information.

Fig. 7 is a flowchart for illustrating an example of third processing in mist spray control by the control device 12.

In the third processing in the spray control, the same processing as steps S11 to S20 in Fig. 4 is performed in steps S51 to S60.

However, in step S55, the spray information setting unit 54 randomly changes spray information, starting from the immediately preceding spray information similarly to step S15, but the random change in the spray information is performed within a predetermined limit range.

Therefore, in the third processing in the spray control, the manner of spraying mist is randomly changed within the predetermined limit range.

Fig. 8 is a flowchart for illustrating an example of setting a limit range used in the third processing in the spray control.

Fig. 8 shows an example of setting a limit range according to a humidity condition appropriate for the growth of a target species.

The target species refers to the species to be grown in the target field.

For example, as illustrated in Fig. 4, when three plant species, Brassicaceae, Apiaceae, and Asteraceae, are planted in the target field, the three plant species and plant species growing in the target field at the time when a limit range is set (at present) can be set as the target species. The plant species growing in the target field can be included in ecosystem information and registered in advance in the ecosystem information database 52.

The target species can be obtained for example from images of the field taken by the camera of the sensor device 11 or from the ecosystem information registered in the ecosystem information database 52 or can be input by the operator as part of the target information.

The limit range can be set at any timing, for example every prescribed time in parallel with the third processing in the spray control.

In step S71, the spray information setting unit 54 obtains from the ecosystem information registered in the ecosystem information database 52, the humidity of the target ecosystem when mist is sprayed according to each kind of spray information registered in the spray information database 53 and associates the humidity with the spray information.

Here, the ecosystem information registered in the ecosystem information database 52 includes the humidity of the target field.

The process proceeds from step S71 to step S72, in which the spray information setting unit 54 estimates (learns) the relation between spray information and the humidity of the target ecosystem when mist is sprayed according to the spray information (hereinafter referred to as the spray information-humidity relation) using the spray information and the humidity associated with the spray information, and the process proceeds to step S73.

In step S73, the spray information setting unit 54 estimates an optimum humidity condition (distribution) optimum for the growth of each target species in the target ecosystem using a growth humidity database (which is not shown) in which information on the humidity of the environment where the species grows is registered, and the process proceeds to step S74.

Here, the growth humidity database is for example a database on the Internet. The obtaining unit 51 can obtain information in the growth humidity database and supply the obtained information to the spray information setting unit 54.

In step S74, the spray information setting unit 54 estimates a common humidity condition (range) that is common and appropriate for the growth of the target species using the appropriate humidity condition for the target species in the target ecosystem, and the process proceeds to step S75.

In step S75, the spray information setting unit 54 sets the range of the spray information with respect to the range of the common humidity condition in the spray information-humidity relation to the limit range, and the process ends.

In the third processing in the spray control, steps S51 to S55 in Fig. 7 and the processing in setting the limit range in Fig. 8 are a learning phase for spray control, and steps S56 to S60 are an execution phase in which spray control is performed.

Fig. 9 illustrates an example of how a limit range is set according to an optimum humidity condition optimum for the growth of target species.

In Fig. 9, the upper part shows the probability density of humidity as the optimum humidity condition for the plant species, and the lower part shows the humidity of the target ecosystem when mist is sprayed according to each spray information. In Fig. 9, a spray frequency is shown as spray information.

For example, as shown in Fig. 1, assume that the three plant species, Brassicaceae, Apiaceae, and Asteraceae, are planted in the target field, and that these three plant species are the target species.

In the lower part in Fig. 9, the humidity is plotted on the abscissa and the spray information (spray frequency) on the ordinate, with the white circles representing the spray frequency as each spray information registered in the spray information database 53 and the humidity of the target ecosystem when mist is sprayed according to the spray information.

The spray information setting unit 54 estimates an approximate curve (straight line) that approximates the spray information-humidity relation using the points representing the spray frequency and the humidity of the target ecosystem when mist is sprayed according to the spray information.

The spray information setting unit 54 estimates, as the optimum humidity condition, the humidity range where the probability density is greater than zero for each of the three target plant species, Brassicaceae, Apiaceae, and Asteraceae, using the growth humidity database.

Furthermore, for each of the three plant species, Brassicaceae, Apiaceae, and Asteraceae as the target species, the spray information setting unit 54 calculates, as an optimum humidity range, a 5%-removed range, which is a range obtained by excluding a part of both ends of the humidity range as the optimum humidity condition, for example, 5%.

The spray information setting unit 54 estimates, as a common humidity condition (range), the overlapping range among the 5%-removed ranges for the three plant species as the target species, Brassicaceae, Apiaceae, and Asteraceae as the optimum humidity ranges.

Then, the spray information setting unit 54 sets, as a limit range, the range of spray information (spray frequency) corresponding to the common humidity condition in the approximate curve that approximates the spray information-humidity relation.

In Fig. 9, the common humidity condition is in the range of 10% to 50% humidity, and the spray frequency corresponding to the range of 10% to 50% humidity in the approximate curve that approximates the spray information-humidity relation ranges from once per hour to 10 times per hour.

In this case, the spray information setting unit 54 changes the spray frequency within the limit range from once per hour to 10 times per hour.

In Fig. 9, the limit range is set for the spray frequency. However, the limit range can be set for spray information other than spray frequency, such as the spray amount, time window, and spray direction (spray position).

The spray information setting unit 54 can also change the spray information within the limit range at all times, or only in specific cases, such as when the humidity of the target ecosystem included in the ecosystem information deviates from the optimum humidity condition (or optimum humidity range) for the target species.

Similarly to the first processing in the spray control, the third processing in the spray control can assist in achieving desired biodiversity, i.e., biodiversity represented by target information.

Furthermore, according to the third processing in the spray control, the spray information is changed within the limit range, and therefore the mist spraying is controlled so that the humidity is within the optimum range for all the target species. Therefore, the mist can be sprayed to allow all the target species to grow, leaving none behind.

Here, the overlapping range among the optimum humidity ranges of the target species is estimated as a common humidity condition that is common and optimum for the growth of these target species, and the range of spray frequency for that common humidity condition in the approximate curve that approximates the spray information-humidity relation is set as the limit range.

Alternatively, as for the limit range, within the overlapping range among the optimum humidity ranges for the target species other than a particular species, the range away (as much as possible) from the particular species may be set as a common humidity condition for the species other than the particular species, and the range of the spray frequency corresponding to the common humidity condition in the approximate curve that approximates the spray information-humidity relation may be set as the limit range.

In this case, when the particular one of the target species grows fast and the other species grow slowly, the growth of the particular species can be inhibited and the growth of the other species can be promoted, the growth of the other species is promoted, so that the growth speeds of the target species can be equalized.

For example, if the three plant species, Brassicaceae, Apiaceae, and Asteraceae, are the target species, and the Brassicaceae plant species accounts for a very large proportion of the target field, a range outside the optimum humidity range for the Brassicaceae plant species can be set as the common humidity condition, so that he growth of Brassicaceae plant species can be inhibited.

Fig. 10 is a flowchart for illustrating an example of fourth processing in mist spray control by the control device 12.

In the fourth processing in the spray control, the same processing as steps S11 to S13 in Fig. 4 is performed in steps S81 to S83.

The process proceeds from step S83 to step S84, and the spray information setting unit 54 selects information necessary to evaluate the state of the ecosystem from the ecosystem information registered in the ecosystem information database 52 using an evaluation method corresponding to the target information. Using the information selected from the ecosystem information, the spray information setting unit 54 evaluates the current state of the target ecosystem, e.g., biodiversity, according to the evaluation method corresponding to the target information and calculates an evaluation score for the current target ecosystem.

Here, the evaluation method corresponding to the target information enables evaluation of how much the target represented by the target information has been achieved. For example, if the target information represents the improvement of biodiversity, the evaluation method corresponding to the target information can be a method to calculate a Habitat Suitability Index, which can be an index of biodiversity. The Habitat Suitability Index is disclosed for example in JP 2014-006907A.

The spray information setting unit 54 selects diversity information and other information necessary to calculate a habitat suitability index from the ecosystem information and calculates a Habitat Suitability Index as an evaluation score using the selected information.

For example, if the target information represents the improvement of the performance of a specific ecosystem service in the ecosystem, an evaluation method corresponding to the target information can be applied, such as a method to calculate a numerical value (scalar value) obtained by quantifying the performance of the specific ecosystem service as an evaluation score.

For example, if the target information represents the improvement of ecosystem service performance as a result of increase in the diversity of soil microorganisms in the ecosystem, the spray information setting unit 54 can select, from the ecosystem information, diversity information about soil microorganisms, species having biological interactions that contribute to the growth of soil microorganisms and biological interactions that inhibit the growth of soil microorganisms, and other kinds of information that can be used to calculate a numerical value (performance value) obtained by quantifying the performance of ecosystem services by soil microorganism, and a performance value as an evaluation score can be calculated using the selected information.

The process proceeds from step S84 to step S85, and then the manner of spraying mist is changed according to the evaluation score.

In other words, in step S85, the spray information setting unit 54 determines whether the target ecosystem has changed toward the target represented by the target information on the basis of the current evaluation score of the target ecosystem.

For example, it is determined in step S85 that the target ecosystem has changed toward the target represented by the target information when the evaluation score has increased from the previous time, or when the score is equal to or higher than a threshold and has increased from the previous time.

If it is determined in step S85 that the target ecosystem has not changed toward the target represented by the target information, the process proceeds to step S86.

If it is determined in step S85 that the target ecosystem has changed toward the target represented by the target information, the process proceeds to step S88.

In steps S86 to S91, the same processing as steps S15 to S20 in Fig. 4 is performed.

The fourth processing in the spray control can assist in achieving the desired biodiversity, i.e., the biodiversity represented by the target information similarly to the first processing in the spray control.

According to the fourth processing in the spray control, an appropriate evaluation score is used as an evaluation score (or an appropriate evaluation method for calculating the evaluation score), so that it can be determined appropriately whether the target ecosystem has changed toward the target represented by the target information.

### <Example of Spray Information>

Fig. 11 shows an example of spray information.

Fig. 11 shows an example of spray information when N spray devices (1) to (N) are provided as spray devices 13.

The spray information in Fig. 11 includes a spraying frequency, a time window, and a spray amount for each of the N spray devices (1) to (N).

In Fig. 11, the spray frequency is defined as the number of times mist is sprayed per hour, and the spray amount is defined as the amount (volume) of mist sprayed per second.

If the spray direction of the mist from each of the N spray devices (1) to (N) can be controlled, the spray direction can be included in the spray information.

When the spray direction of the mist from each of the N spray devices (1) to (N) is fixed, the location (position) on the ground surface where the mist reaches when sprayed in the fixed spray direction is used as the spray position, and by selecting a spray device (n) from the N spray devices (1) to (N) to spray the mist, the spray position can be specified.

Herein, the spray direction includes the spray position as required since the spray position can be controlled by controlling the spray direction.

In the control device 12, only one of the spray frequency, the time window, the spray amount, and the spray direction can be controlled, or a combination of two or more of the above can be controlled.

The control device 12 controls the manner of spraying mist, such as the spray frequency, the time window, the spray amount, and the spray direction (spray position) so that a complex environment may be created in which the biodiversity of the target ecosystem changes toward the biodiversity represented by the target information.

In an alternative manner of spraying mist, the spray time duration for spraying mist in a single mist spraying occasion may be included.

### <Example of How to Obtain Diversity Information>

Fig. 12 is a flowchart for illustrating an example of how diversity information on plant species is obtained by the obtaining unit 51.

In step S101, the obtaining unit 51 obtains a field image taken by the camera of the sensor device 11, and the process proceeds to step S102.

In step S102, the obtaining unit 51 performs image analysis of the field image to detect areas of individual plants, and the process proceeds to step S103.

In step S103, the obtaining unit 51 classifies the individual plants according to the pixel values of the pixels in the areas of the individual plants, and the process proceeds to the step S104.

In other words, the obtaining unit 51 classifies individual plants into clusters by performing multivariate analysis using the tints of the areas of the individual plants, i.e., the pixel values for each wavelength in the areas of the individual plants as a multivariate variable.

In step S104, the obtaining unit 51 obtains diversity information representing the biodiversity of the plant species from the classification results of the individual plants. For example, the obtaining unit 51 obtains the number of clusters into which the individual plants are classified as the diversity information on the plant species.

Fig. 13 is a flowchart for illustrating another example of how to obtain diversity information plant species by the obtaining unit 51.

In step S111, the obtaining unit 51 obtains a field image taken by the camera of the sensor device 11, and the process proceeds to step S112.

In step S112, the obtaining unit 51 inputs the field image to a trained learning model that has been trained for example by machine-learning using images of plant species, detects areas of plant species in the field image, and identifies the plant species in the areas, and the process proceeds to step S113. Here, the learning model used in step S 112 outputs, in response to the input of the image, the plant species (the names of the species) in the image, or whether the plant species in the image includes any specific plant species.

In step S113, the obtaining unit 51 obtains diversity information on the plant species from the plant species identified by inputting the field image to the learning model.

It can be considered that the method for obtaining the diversity information in Fig. 12 uses image analysis to obtain the diversity information, while the method for obtaining the diversity information in Fig. 13 uses the trained learning model that has been trained for example by machine-learning.

Fig. 14 is a flowchart for illustrating an example of how to obtain diversity information on microbial species by the obtaining unit 51.

In step S121, the obtaining unit 51 obtains a result of metagenome analysis (using DNA barcoding) using, as a sample, soil (topsoil) from the target field, and the process proceeds to step S122.

Metagenome analysis can be performed for example as an operator sends the sample to a service provider which provides a metagenome analysis service. The service provider performs metagenome analysis and uploads the metagenome analysis result (data) on the Internet or sends the result back to the operator.

The obtaining unit 51 obtains the analysis result of the metagenome analysis by downloading the analysis result from the Internet or having the metagenome analysis result input by the operator.

In step S122, the obtaining unit 51 identifies (soil) microbial species in the target field from the metagenome analysis result, and the process proceeds to step S123.

In step S123, the obtaining unit 51 obtains the microbial species diversity information on the microbial species identified from the metagenome analysis result.

Fig. 15 is a flowchart for illustrating an example of how to obtain diversity information on insect species by the obtaining unit 51.

In step S131, the obtaining unit 51 obtains a field image taken by the camera of the sensor device 11, and the process proceeds to step S132.

In step S132, the obtaining unit 51 inputs the field image to a learned learning model that has been trained for example by machine-learning using images of insect species, detects areas of insect species in the field image, and identifies the insect species in the areas, and the process proceeds to step S133. Here, the learning model used in step S 132 outputs, in response to the input of the image, the insect species (species name) in the image, or whether the insect species in the image are a particular insect species.

In step S133, the obtaining unit 51 obtains diversity information on the insect species from the insect species identified by inputting the field image to the learning model.

For example, the obtaining unit 51 can obtain, as the diversity information on the species, quantified values (quantitative values) such as the number of species as well as qualitative information (qualitative values) such as whether biodiversity is high or low.

The method for obtaining the diversity information on the insect species in Fig. 15 is a method using a trained learning model, but the diversity information on the insect species can also be obtained by using image analysis.

Furthermore, the camera of the sensor device 11 that captures the field image is positioned, for example, at such a location that the camera has an overhead view of the target field from above and is not exposed to mist sprayed from the spray device 13.

For example, when the nozzle 25 is positioned in the air above the target field and directed toward the ground, and mist is sprayed downward, the camera of the sensor device 11 is positioned above the nozzle 25.

For example, when the nozzle 25 is positioned at the ground and directed upward and mist is sprayed upward, the height to be reached the mist is measured in advance, and the camera of the sensor device 11 is positioned higher than the height.

In Fig. 14, the diversity information on the soil microorganisms is obtained by metagenome analysis using soil from the target field as a sample, while diversity information on various microorganisms may be obtained by metagenome analysis using for example individual plants or air in the target field as a sample.

### <Mist Spray Control According to Population Density>

Fig. 16 is a view for illustrating an outline of mist spray control according to population density.

As described with reference to Fig. 1, using the spray system 10, aerosols containing viruses and other substances suspended in the air can be adsorbed by the sprayed mist and deposited on the topsoil, so that the efficiency of the antimicrobial and antivirus functions by the topsoil microbial flora can be increased.

Therefore, in the spray system 10, mist spraying can be controlled according to the ecosystem information and the target information as well as according to the population density of a target field (target ecosystem).

When controlling mist spraying according to the population density, the obtaining unit 51 obtains sensor information from the sensor device 11 on the basis of which the population density can be estimated and uses the sensor information to calculate the population density for each unit space of the target field (target ecosystem). The unit space is a space with a prescribed size on the ground surface of the target field obtained by dividing the ground surface of the target field by a unit plane with a prescribed size, with the unit plane as the base area.

Examples of the method for estimating the population density of the unit space include a method for estimating the population density by image recognition of people in a field image taken of the target field and a method for estimating the population density using carbon dioxide (concentration) in the air.

The population density of the target field is one kind of information that represents the state of the ecosystem (target ecosystem) of the target field, and the obtaining unit 51 includes the population density per unit space in the ecosystem information and registers the information in the ecosystem information database 52.

In addition to the population density, the obtaining unit 51 obtains a condition for spraying mist according to the population density, for example, in response to an operation by the operator and supplies the condition to the spray information setting unit 54.

The condition for spraying mist according to the population density is the condition for spraying mist depending on the population density and can include a threshold for the population density to turn on or off the mist spraying, and a threshold for the increasing or decreasing speed of the population density.

The spray information setting unit 54 sets spray information and controls mist spraying according to the population density included in the ecosystem information registered in the ecosystem information database 52 and the condition for spraying mist according to the population density from the obtaining unit 51.

Fig. 17 illustrates an example of how to set spray information according to population density.

In Fig. 17, the abscissa represents population density, and the ordinate represents spray information such as a spray amount, a spray frequency, and a spray duration.

In Fig. 17, when the population density is in the range from 0 to a first threshold THD1 for the population density, the spray amount is for example set to 0. Then, from the first threshold THD 1 for the population density to a second threshold THD2 (>THD1), the spray amount is set for example to a value that increases (proportionally) with the population density. When the population density is equal to or higher than the second threshold THD2, the spray amount is for example set to a maximum value V1.

For example, if the spray amount is expressed by Y and the population density is expressed by X, the spray amount Y is set for the population density X in the range from the first threshold THD 1 to the second threshold THD2 according to the expression Y = aX + b.

The a and b in the expression Y = aX + b are coefficients that are set in advance and can be set for example to obtain such a spray amount Y that people subjectively feel comfortable with and a spray amount Y that does not get people soaked.

Fig. 18 is a diagram for illustrating an exemplary configuration of the sensor device 11 when population density is estimated using carbon dioxide concentration.

In Fig. 18, the sensor device 11 has a camera, a carbon dioxide meter, a pyrheliometer, and a spectrophotometer.

The camera captures images of a field and outputs RGB (red, green, blue) images of the field.

The carbon dioxide meter measures and outputs the concentration of carbon dioxide in the air. The carbon dioxide concentration output by the carbon dioxide meter will also be referred to as the measured carbon dioxide concentration.

The pyrheliometer measures and outputs the amount of solar radiation.

The spectrophotometer measures and outputs the (optical) intensity of near-infrared light.

The locations of the camera, the carbon dioxide meter, the pyrheliometer, and the spectrophotometer are not particularly limited, but those devices are preferably in locations protected from mist. However, if the camera, the carbon dioxide meter, the pyrheliometer, and the spectrophotometer are waterproof, these devices can be placed in locations exposed to mist.

In the obtaining unit 51, for example, the population density can be estimated solely from change (increase) in the measured carbon dioxide concentration. In this case, for the estimation of the population density, the sensor device 11 may include only a carbon dioxide meter.

However, the measured carbon dioxide concentration is affected by carbon dioxide used (consumed) by plant species in the target field through photosynthesis, in addition to carbon dioxide emitted by people through respiration.

Therefore, in addition to the measured carbon dioxide concentration, using the carbon dioxide (concentration) used through photosynthesis by the plant species in the target field, the population density can be estimated more accurately by taking into consideration of the carbon dioxide used through photosynthesis by the plant species in the target field in the measured carbon dioxide concentration.

Fig. 19 is a flowchart for illustrating an example of estimating population density using a measured carbon dioxide concentration and carbon dioxide used through photosynthesis by the plant species in the target field.

In step S141, the obtaining unit 51 obtains a field image, a measured carbon dioxide concentration (an amount of carbon dioxide), an amount of solar radiation, and an intensity of near-infrared light from the sensor device 11, and the process proceeds to step S142.

In step S142, the obtaining unit 51 estimates (quantifies), from the field image, the amount of chlorophyll in a part of the plant species in a unit space that appears in the field image, and the process proceeds to step S143.

In step S143, the obtaining unit 51 estimates (quantifies), from the intensity of near-infrared light, the amount of leaves of the plant species in the unit space that are not visible in the field image as the amount of biomass in the unit space, and the process proceeds to step S144.

In step S144, the obtaining unit 51 estimates the amount of chlorophyll in the unit space by correcting the amount of chlorophyll estimated from the field image by the amount of biomass, i.e., estimates the amount of the chlorophyll in the parts of the plant species in the unit space shown and not shown in the field image, and the process proceeds to step S145.

In step S145, the obtaining unit 51 estimates the rate of photosynthesis (the amount of change in carbon dioxide used through photosynthesis) in the unit space from the amount of chlorophyll and the amount of solar radiation in the unit space, and the process proceeds to step S146.

For example, the obtaining unit 51 estimates the photosynthetic rate according to the expression [photosynthetic rate] = [amount of chlorophyll] × [amount of solar radiation] × [coefficient]. The coefficient is calculated in advance by training a learning model expressed by the expression [photosynthetic rate] = [amount of chlorophyll] × [amount of solar radiation] × [coefficient].

In step S146, using the change in the measured carbon dioxide concentration and the photosynthetic rate in the unit space, the obtaining unit 51 estimates the population density that is free from the effect of the carbon dioxide that changes (decreases) due to photosynthesis and reflects the change (increase) in carbon dioxide due to human respiration.

The method for estimating the population density based on the amount of change in carbon dioxide due to human respiration using the amount of change in the measured carbon dioxide concentration and the photosynthetic rate may use a learning model that takes the measured carbon dioxide concentration change and photosynthetic rate as input and generates population density as output.

As described above, the population density of a target field (target ecosystem) can be estimated more accurately by considering the carbon dioxide used through photosynthesis in the target field (target ecosystem).

Fig. 20 is a flowchart for illustrating processing in mist spray control according to both diversity information and the population density.

In steps S161 and S162, the same processing as steps S11 and S12 in Fig. 4 is performed, and the process proceeds to step S163.

In step S163, the obtaining unit 51 obtains the population density of a unit space in a target ecosystem by estimation for example as described with reference to Fig. 19, and the process proceeds to step S164.

In step S164, the spray information setting unit 54 sets spray information according to the population density for example as described with reference to Fig. 17, and the process proceeds to step S165. In other words, the spray information setting unit 54 sets spray information for spraying mist to the unit space according to the population density of the unit space.

In step S165, the spray information setting unit 54 outputs the spray information to the spray device 13 to control mist spraying so that the spray device 13 sprays mist according to the spray information, and the process proceeds to step S166.

Here, since the mist spraying is controlled according to the population density in steps S163 to S165, the processing in steps S163 to S165 is also referred to as spray control according to the population density.

In step S166, the control unit 50 determines whether the condition for performing spray control according to the diversity information is satisfied.

In Fig. 20, the condition for performing the spray control according to the diversity information can be for example that it is at prescribed time or in a prescribed time window, that the spray control according to the population density has been performed for a prescribed number of times, or that the population density is equal to or less than a threshold (first threshold THD1).

If it is determined in step S166 that the condition for performing the spray control according to the diversity information is not satisfied, the process returns to step S163, and the same processing is repeated.

If it is determined in step S166 that the condition for performing the spray control according to the diversity information is satisfied, the process proceeds to step S167, and the spray control according to the diversity information is performed as follows.

In other words, in steps S167 to S170, for example the same processing as steps S33 to S36 in the second example of the spray control processing in Fig. 5 is performed.

The process then proceeds from step S170 to step S171, and the control unit 50 determines whether to reset the target information or the initial information, similarly to step S20 in Fig. 4.

If it is determined in step S171 that the target information or the initial information is not to be reset, the process returns to step S163, and the same processing is repeated.

Meanwhile, if it is determined in step S171 that the target information or the initial information is to be reset, the process stands by for the operator to input new target information or new initial information and then returns to step S161, and the same processing is repeated.

Here, spray control according to diversity information is mist spray control performed according to target information and ecosystem information including diversity information. In Fig. 20, steps S33 to S36 in the second example of processing in spray control in Fig. 5 (and similar processing) is performed as the spray control according to diversity information, but the processing in steps S13 to S19 in the first example of the spray control processing in Fig. 4, the processing in steps S53 to S59 in a third example of the spray control processing in Fig. 7, or the processing in steps S83 to S90 in a fourth example of the spray control processing in Fig. 10 (and similar processing) can also be performed for spray control according to diversity information.

In mist spray control according to both diversity information and population density, the spray control according to the population density is performed in addition to spray control according to the diversity information.

The spray control according to the diversity information can assist in achieving desired biodiversity, e.g., improvement in the biodiversity. According to the improvement in biodiversity, especially the species diversity of the topsoil microbial flora, the antimicrobial and antiviral function as ecosystem services can be expected to be improved.

According to the spray control based on the population density, mist is sprayed in a densely populated unit space. Therefore, in the densely populated unit space, aerosols in the air are adsorbed and settled by the mist, and the antimicrobial and antivirus functions of the topsoil microbial flora can be expected to become more efficient. Furthermore, this can contribute to control of infectious diseases in the densely populated unit space.

Here, in Fig. 20, between the spray control according to the population density and the spray control according to the diversity information, the spray control according to the population density is given priority (first). Therefore, because the environment (for example humidity) of the target field changes due to the preferentially performed spray control according to the population density, the manner of mist spraying in the spray control according to the diversity information is affected by the spray control according to the population density (or environmental change as a result thereof).

The spray control according to the population density and the spray control according to the diversity information can be performed with priority given to the spray control according to the diversity information.

### <Mist Spray Control According to Aerosol Density>

Fig. 21 is a diagram for illustrating an outline of mist spray control according to aerosol density.

As described with reference to Fig. 1, the spray system 10 allows aerosols containing viruses and other substances suspended in the air to be adsorbed by the mist and deposited on the topsoil, so that the efficiency of the antimicrobial and antivirus functions of the topsoil microbial flora can be improved.

Therefore, in the spray system 10, mist spraying can be controlled according to the ecosystem information and the target information as well as according to the aerosol density in the target field (target ecosystem).

When controlling mist spraying according to the aerosol density, the sensor device 11 detects an aerosol density (aerosol amount) and outputs the density as sensor information.

The obtaining unit 51 obtains the aerosol density per unit space of the target field (target ecosystem) from the sensor information from the sensor device 11.

The aerosol density of the target field is one kind of information representing the state of the ecosystem (target ecosystem) of the target field, and the obtaining unit 51 includes the aerosol density for each unit space in the ecosystem information and registers the information in the ecosystem information database 52.

In addition to the aerosol density, the obtaining unit 51 obtains a condition for mist spraying according to the aerosol density, for example in response to an operation by the operator and supplies the condition to the spray information setting unit 54.

The condition for mist spraying according to the aerosol density is the condition for mist spraying according to the aerosol density and can be a threshold for the aerosol density to turn on or off the mist spraying, or a threshold for the increasing or decreasing speed of the aerosol density.

The spray information setting unit 54 sets spray information and controls mist spraying according to the aerosol density included in the ecosystem information registered in the ecosystem information database 52 and the condition for mist spraying according to the aerosol density from the obtaining unit 51.

Fig. 22 illustrates an example of how to set spray information according to aerosol density.

In Fig. 22, the abscissa represents the aerosol density, and the ordinate represents the spray information such as a spray amount, a spray frequency, and spray duration.

In Fig. 22, when the range of the aerosol density is from 0 to a first threshold THA1 for the aerosol density, for example the spray amount is set to 0. Then, in the range from the first aerosol density threshold THA1 to a second aerosol density threshold THA2 (> THAI), the spray amount is set to a value that increases (proportionally) with the aerosol density. When the aerosol density is equal to or higher than the second threshold THA2, the spray amount is set to a maximum value V2.

For example, if the spray amount is expressed by Y and the aerosol density is expressed by X, the spray amount Y is set according to the expression Y = aX + b for the aerosol density X in the range of the aerosol density from the first threshold THA1 to the second threshold THA2.

The a and b in the expression Y = aX + b are coefficients to be set in advance and can be set for example to obtain such a spray amount Y that the aerosol density decreases to a prescribed value or less within a prescribed time period, such a spray amount Y that the decreasing speed of the aerosol density is a prescribed value or more, and such a spray amount Y that people do not get soaked.

Fig. 23 is a diagram of an exemplary configuration of the sensor device 11 that detects aerosol density.

In Fig. 23, the sensor device 11 has an aerosol detector that detects aerosol density.

The location of the aerosol detector is not particularly limited, but the aerosol detector is desirably provided in a location protected from mist. However, if the aerosol detector is waterproof, the detector can be placed in a location exposed to mist.

Fig. 24 is a flowchart for illustrating processing in mist spray control according to both diversity information and aerosol density.

In steps S181 and S182, the same processing as steps S11 and S12 in Fig. 4 is performed, and the process proceeds to step S183.

In step S183, the obtaining unit 51 obtains the aerosol density in the unit space of the target ecosystem, and the process proceeds to step S184.

In step S184, the spray information setting unit 54 sets spray information according to the aerosol density for example as described with reference to Fig. 22, and the process proceeds to step S185. In other words, the spray information setting unit 54 sets the spray information for spraying mist into the unit space according to the aerosol density of the unit space.

In step S185, the spray information setting unit 54 outputs the spray information to the spray device 13 to control mist spraying so that mist spraying by the spray device 13 is performed according to the spray information, and the process proceeds to step S186.

Here, since the mist spraying is controlled according to the aerosol density in steps S183 to S185, the processing in steps S183 to S185 is also referred to as spray control according to the aerosol density.

In step S186, the control unit 50 determines whether the condition for performing spray control according to the diversity information is satisfied.

In Fig. 24, examples of the condition for performing the spray control according to the diversity information may include the arrival of a prescribed time, being within a prescribed time window, the spray control according to the aerosol density having been performed a prescribed number of times, or the aerosol density attaining a value equal to or less than a threshold (the first threshold THAI).

If it is determined in step S186 that the condition for performing the spray control according to the diversity information is not satisfied, the process returns to step S183, and the same processing is repeated.

If it is determined in step S186 that the condition for performing the spray control according to the diversity information is satisfied, the process proceeds to step S187, and the spray control according to the diversity information is performed thereafter.

In other words, in steps S187 to S190, the same processing as steps S33 to S36 in the second example of the spray control processing in Fig. 5 is performed.

As for the spray control according to the diversity information, the first, third, or fourth example of processing in the spray control (and similar processing) can be performed instead of the second example of processing in the spray control, as described with reference to Fig. 20.

The process then proceeds from step S190 to step S191, and the control unit 50 determines whether to reset the target information or the initial information similarly to step S20 in Fig. 4.

If it is determined in step S191 that the target information or the initial information is not to be reset, the process returns to step S183, and the same processing is repeated.

Meanwhile, if it is determined in step S191 that the target information or initial information is to be reset, the process stands by for the operator to input new target information or new initial information and then returns to step S181, and the same processing is repeated.

In the mist spray control according to both the diversity information and the aerosol density, the spray control according to the aerosol density is performed in addition to the spray control according to the diversity information.

The spray control according to the diversity information can assist in achieving desired biodiversity, e.g., improving the biodiversity. According to the improved biodiversity, especially the improved species diversity of the surface soil microbial flora, the antimicrobial and antiviral functions as ecosystem services can be expected to be improved.

According to the spray control according to the aerosol density, for example, mist is sprayed in a unit space with a high aerosol density. Therefore, in the unit space with the high aerosol density, high concentration aerosols in the air are adsorbed and settled by the mist, and the antimicrobial and antivirus functions of the surface soil microbial flora can be expected to become more efficient. Furthermore, aerosols suspended in the unit space with a high aerosol density can be reduced, and the unit space with such a high aerosol density can be prevented from existing for a prolonged period of time. As a result, the effective reproduction number of infectious diseases in the unit space can be reduced, and the risk of infection can be reduced.

Here, in Fig. 24, between the spray control according to the aerosol density and the spray control according to the diversity information, the spray control according to the aerosol density is performed with priority. Therefore, the environment of the target field changes due to the spray control according to the aerosol density performed with priority, the manner of mist spraying in the spray control according to the diversity information is affected by the spray control according to the aerosol density.

The spray control according to the aerosol density and the spray control according to the diversity information can be performed with priority given to the spray control according to the diversity information.

Fig. 25 shows an example of aerosol density in a unit space and the effective reproduction number of aerosol-infectious diseases.

When it is assumed that the effective reproduction number R of aerosol-infectious diseases is proportional to the aerosol density d, the effective reproduction number R is expressed by the expression R∝d.

When time is represented by t and the time decay constant of the aerosol density d without mist spraying is represented by a>0, the aerosol density d without mist spraying is expressed by the expression d=Aa^(-at).

A is a constant greater than 0 and represents the aerosol density at t=0, and α is a constant greater than 1 and is defined so that α^(-a) is the rate of decay of the aerosol density per unit time.

Assume now that the time when mist spraying starts at t'. The mist spraying causes aerosols suspended in the air to be adsorbed by the mist and fall onto the soil and vegetation in the field, resulting in a decrease in the aerosol density as compared to the case without mist spraying.

When the aerosol density with mist spraying is expressed as d', the effective reproduction number R' with mist spraying is expressed by the expression R'∝ d'.

The aerosol density d' with mist spraying is expressed by the expression d'=Aα^(-at-G(t,t')).

As for the function G(t,t'), G(t,t')=0 results when t<t', and G(t,t')=b*(t-t') results when t>=t'.

In the above expression, b is the time decay constant of the aerosol density d' with mist spraying and is greater than a.

The ratio (value of) R'/R between the effective reproduction number R' with mist spraying and the effective reproduction number R without mist spraying is given by the expression R'/R=d'/d=Aα^(-at-G(t,t'))/(Aα^(-at))=α^(-G(t,t')), which agrees with the decay α^(-G(t,t')) of the aerosol density due to mist spraying.

Therefore, the decay of the aerosol density in a space by mist spraying can reduce the effective reproduction number in the space and reduce the risk of infection of aerosol-infectious diseases.

### <Mist Spray Control According to Population Density and Aerosol Density>

Fig. 26 is a diagram for illustrating an outline of mist spray control according to population density and aerosol density.

The spray system 10 can control mist spraying according to ecosystem information and target information and also according to the population density and the aerosol density of a target field (target ecosystem).

When the mist spraying is controlled according to the population density, the obtaining unit 51 obtains from the sensor device 11, sensor information on the basis of which the population density can be estimated, and uses the sensor information to calculate (estimate) the population density per unit area of the target field (target ecosystem).

When the mist spraying is controlled according to aerosol density, the sensor device 11 detects an aerosol density (aerosol amount) and outputs the density as sensor information.

The obtaining unit 51 obtains an aerosol density for each unit space of the target field (target ecosystem) from the sensor information from the sensor device 11.

Both the population density and the aerosol density of the target field are each information representing the state of the ecosystem (target ecosystem) of the target field, and the sensor device 11 includes the population density and the aerosol density per unit area in the ecosystem information and registers these kinds of information in the ecosystem information database 52.

For example, as described with reference to Figs. 16 and 21, the obtaining unit 51 obtains a mist spray condition according to the population density and a mist spray condition according to the aerosol density in response to an operation by the operator and supplies the conditions to the spray information setting unit 54.

The spray information setting unit 54 sets spray information and controls mist spraying according to the population density included in the ecosystem information registered in the ecosystem information database 52 and the mist spray condition according to the population density from the obtaining unit 51.

The spray information setting unit 54 also sets spray information and controls mist spraying according to the aerosol density included in the ecosystem information registered in the ecosystem information database 52 and the condition for mist spraying according to the aerosol density from the obtaining unit 51.

Fig. 27 is a flowchart for illustrating example of processing in mist spray control according to diversity information, population density, and aerosol density.

In steps S211 and S212, the same processing as steps S11 and S12 in Fig. 4 is performed, and the process proceeds to step S213.

In step S213, spray control is performed according to the population density described with reference to Fig. 20, and the process proceeds to step S214.

In step S214, spray control is performed according to the aerosol density described with reference to Fig. 24, and the process proceeds to step S215.

In step S215, the control unit 50 determines whether the condition for performing spray control according to the diversity information is satisfied.

In Fig. 27, examples of the condition for performing spray control according to the diversity information may include the arrival of at prescribed time, being in a prescribed time window, one or both of spray control according to the aerosol density and spray control according to the aerosol density having been performed a prescribed number of times, or one or both of the population density and the aerosol density attaining a value equal to or lower than a threshold.

If it is determined in step S215 that the condition for performing the spray control according to the diversity information is not satisfied, the process returns to step S213, and the same processing is repeated.

If it is determined in step S215 that the condition for performing the spray control according to the diversity information is satisfied, the process proceeds to step S216, and spray control is performed according to the diversity information as described with reference to Figs. 20 and 24.

The process then proceeds from step S216 to step S217, and the control unit 50 determines whether to reset the target information or the initial information similarly to step S20 in Fig. 4.

If it is determined in step S217 that the target information or the initial information is not to be re-set, the process returns to step S213, and the same processing is repeated.

Meanwhile, if it is determined in step S217 that the target information or the initial information is to be reset, the process stands by for the operator to input new target information or new initial information and then returns to step S211, and the same processing is repeated.

According to the mist spray control according to the diversity information and the mist spray control according to the population density and the aerosol density, the same advantageous effects as the mist spray control according to both the diversity information and the population density and the mist spray control according to both the diversity information and the aerosol density can be achieved.

Here, in Fig. 27, among the spray control according to population density, the spray control according to the aerosol density, and the spray control according to the diversity information, the spray control according to the population density and the spray control according to the aerosol density may be performed with priority. Therefore, the spray control according to the population density and the spray control according to the aerosol density that are given priority change the environment of the target field, and the manner of mist spraying in the spray control according to the diversity information is affected by the spray control according to the population density and the spray control according to the aerosol density.

Among the spray control according to the population density, the spray control according to the aerosol density, and the spray control according to the diversity information, the spray control according to the diversity information may be performed with priority.

In Fig. 27, between the spray control according to the population density and the spray control according to the aerosol density, the spray control according to the population density is performed with priority, but the spray control according to the aerosol density can be performed with priority.

### <Mounting Camera of Sensor Device 11 and Nozzle 25>

Fig. 28 is a view for illustrating an example of how to mount (provide) the camera of the sensor device 11 and a nozzle 25 in the field.

In Fig. 28, the camera is mounted on a rotary shaft that extends downward from a rotary stand (not shown) fixed at the upper level so that the direction of shooting is obliquely downward with respect to the pitch direction.

In Fig. 28, the nozzle 25 is mounted on a rotary shaft different from the camera-mounted rotary shaft, so that the direction of spraying is obliquely downward with respect to the pitch direction.

The camera and the nozzle 25 rotate by the rotation of the rotary shafts. As a result, in the yaw direction, the camera can take pictures in a 360-degree direction centered on the rotary shaft, and the nozzle 25 can spray mist in any direction in the 360-degree direction centered on the rotary shaft.

As described above, when the camera is mounted on the rotary shaft, the camera can take pictures in the 360-degree direction centered on the rotary shaft by constantly rotating the shaft.

For example, if a field image obtained by the camera shows specific vegetation, the camera can recognize the direction of the specific vegetation as seen from the nozzle 25 on the basis of the direction of the camera when the field image was taken, and mist can be sprayed toward the specific vegetation using that direction as the spray direction.

For example, if a person is in the field image, the direction of the person as seen from the nozzle 25 can be recognized from the direction of the camera when the field image was taken, and mist can be sprayed toward the person using that direction as the spray direction.

When for example the spray direction can be set because the nozzle 25 is attached to a rotary shaft, the spray direction can be set randomly or set so that the mist is sprayed (falls) at a specific position, or the mist can be set in a direction toward (to touch) a specific object such as a person or vegetation as described above.

It is assumed that the rotary stand that supports the rotary shafts to which the camera and the nozzle 25 are mounted is fixed, but the rotary stand can be configured to be movable.

An RGB camera that receives visible light, a multispectral camera or a stereo camera may be used as the camera.

A 360-degree camera (omnidirectional camera) can also be used as the camera. When the 360-degree camera is used, the camera does not need to be mounted to the rotary shaft and can be fixed.

Fig. 29 is a view for illustrating another example of how to mount (provide) the camera of the sensor device 11 and the nozzle 25 in the field.

In Fig. 28, the camera and the nozzle 25 are mounted on the separate rotary shafts, but in Fig. 29, these devices are mounted on the same rotary shaft. Therefore, in Fig. 29, the nozzle 25 and the camera rotate together.

Furthermore, the camera and the nozzle 25 are mounted on the rotary shaft so that the shooting and spray directions are identical.

As described above, when the camera and the nozzle 25 are mounted on the same rotary shaft, the direction of taking pictures of the field with the camera and the direction of spraying mist from the nozzle 25 can be set similarly to the case in which these elements are mounted on the separate rotary shafts as shown in Fig. 28.

When the camera and the nozzle 25 are mounted on the separate rotary shafts as shown in Fig. 28, and mist is sprayed from the nozzle 25 in a certain spray direction, the rotation of the rotary shaft on which the nozzle 25 is mounted must be stopped for a certain period of time during which the mist is sprayed in that spray direction but it is not necessary to stop the rotation of the rotary shaft on which the camera is mounted.

Meanwhile, as shown in Fig. 29, when the camera and the nozzle 25 are mounted on the same rotary shaft, and mist is sprayed from the nozzle 25 in a certain spray direction, it is necessary to stop the rotation of the rotary shaft to which the camera and the nozzle 25 are mounted for a certain period of time during which the mist is sprayed in that spray direction.

### <Setting Spray Direction>

Fig. 30 is a flowchart for illustrating an example of how to set a spray direction in spray information for spraying mist.

When spray information is set, the spray direction (angle) can be set so that mist is sprayed toward a person when the person is in the space where the mist is sprayed, i.e., the mist touches the person and then falls on the topsoil or vegetation.

In step S231, the spray information setting unit 54 causes the obtaining unit 51 to obtain the shooting direction of the camera of the sensor device 11 and an image of the field from the obtaining unit 51, and the process proceeds to step S232.

In step S232, the spray information setting unit 54 detects objects in the field image, and the process proceeds to step S233.

For example, the spray information setting unit 54 detects a person and vegetation as objects in the field image using a learning model that has been trained in advance. The objects may be detected using the learning model for example by semantic segmentation.

In step S233, the spray information setting unit 54 determines, from an object detection result, whether a person is present in the target field, i.e., whether a human object has been detected.

If it is determined in step S233 that there is no person, the process proceeds to step S234, and the spray information setting unit 54 sets a spray direction in a default method and the process ends.

The default method is for example the method for setting the spray direction in the first processing to the fourth processing in the spray control, and therefore in the default method, the spray direction is set randomly or using a learning model.

Meanwhile, if it is determined in step S233 that there is a person, the process proceeds to step S235, and the spray information setting unit 54 performs proximity determination to determine whether the person and vegetation are located in the proximity on the basis of the object detection result.

The case in which a person and vegetation are located in the proximity includes when the person is located in proximity of an area of vegetation as well as when the person is in an area of vegetation.

If it is determined in the proximity determination in step S235 that the person and the vegetation are not located in the proximity, the process proceeds to step S236.

In step S236, the spray information setting unit 54 recognizes the direction in which the person is present in the field image using the shooting position and direction of the camera of the sensor device 11. Then, the spray information setting unit 54 sets the spray direction so that the mist touches the person in the field image according to the direction of the person in the field image, and the process ends. In the spray information setting unit 54, the shooting direction of the camera is obtained from the obtaining unit 51, provided that the shooting position of the camera is known.

If it is determined in the proximity determination in step S235 that the person and vegetation are located in proximity, the process proceeds to step S237.

In step S237, the spray information setting unit 54 recognizes the direction of the person in the field image and the direction of vegetation in the proximity of the person using the shooting position and direction of the camera of the sensor device 11. The spray information setting unit 54 then sets a spray direction so that the mist touches the person in the field image and then falls on the vegetation near the person, according to the direction of the person in the field image and the direction of the vegetation near the person (or the topsoil of the soil where the vegetation near the person is planted), and the process ends.

For example, as shown in Fig. 29, when the camera of the sensor device 11 and the nozzle 25 are mounted on the same rotary shaft and rotate together, the shooting direction of the camera can be recognized from the spraying direction of the nozzle 25. Therefore, if the spray information setting unit 54 can obtain the spray direction of the nozzle 25, the shooting direction by the obtaining unit 51 is not necessary in setting the spray direction.

In Fig. 30, for example, it is assumed that the nozzle 25 is mounted to the rotary shaft that rotates as described with reference to Figs. 28 and 29. Alternatively, a plurality of nozzles 25 in a grid-like arrangement can be mounted on high above the field so as to cover the entire field with the spraying direction fixed downward.

In this case, the spray direction is set by selecting a nozzle that sprays mist among the plurality of nozzles in the grid-like arrangement, and the spray position for spraying mist is set.

As for setting of the spraying position, when there is no person in the target field, a nozzle to spray mist is selected according to a default method, for example, randomly. If there is a person in the target field, a nozzle mounted above the person or the person in the proximity of vegetation is selected as the nozzle to spray the mist. This allows spray control to be performed so that the mist touches the person and falls on the topsoil or the vegetation.

Fig. 31 is a view for illustrating the proximity determination method in step S235 in Fig. 30.

Fig. 31 shows a field image taken by the camera of the sensor device 11 of a target field, where a person is located just in front of vegetation when viewed in the shooting direction from the shooting position of the camera.

When for example the sensor device 11 has a stereo camera or a ToF sensor and the obtaining unit 51 can obtain depth information from sensor information from the sensor device 11, the distance between the person and the vegetation is calculated. Then, in proximity determination, if the distance between the person and the vegetation is equal to or less than a threshold, it is determined that the person and the vegetation are located in proximity.

Meanwhile, when the obtaining unit 51 cannot obtain the depth information and there is an overlap between the range of the person and the range of the vegetation in the field image, it is determined in the proximity determination that the person and the vegetation are located in the proximity of each other.

For example, in the field image shown in Fig. 31, there is an overlap between the range of the person and the range of the vegetation in the field image, and therefore it is determined in the proximity determination that the person and the vegetation are located in the proximity of each other.

In the vegetation in the field image is detected, the plant species are detected, and the range of the vegetation is detected as a cluster of closely spaced plant species in the field image.

Fig. 32 is a plan view of examples of mist spraying more effective in reducing the risk of aerosol-infectious diseases.

In Fig. 32, A, B, and C all show a situation in which a person and vegetation are located in close proximity to each other in the target field.

In Fig. 32 at A, the person is surrounded by multiple kinds of vegetation. In Fig. 32 at B, the person is located within one large kind of vegetation. In Fig. 32 at C, the person is located just in front of vegetation as viewed in the direction of the nozzle 25, and the nozzle 25, the person, and the vegetation are aligned in a straight line.

For example in Fig. 32, as described with reference to Figs. 28 and 29, the nozzle 25 is mounted on the rotary shaft that extends downward from the rotary stand fixed above so that the spray direction is diagonally downward with respect to the pitch direction.

When a person and vegetation are located in the proximity of each other as shown in Fig. 32, the spray direction is set in Fig. 30 so that the mist touches the person in the field image and then falls on the vegetation near the person (step S237).

In this case, a certain amount of the mist sprayed from the nozzle 25 touches the person, touches, or passes over the surface of the person, or passes around the person, and then falls on the vegetation located in the proximity of the person or on the vegetated soil.

The mist adsorbs aerosols suspended around the person or adhering to the surface of the person and then falls onto the vegetation or the vegetated soil.

Therefore, the aerosols can efficiently fall onto the vegetation or the vegetated soil.

In a field with improved biodiversity, an increase can be expected in the species diversity of the microbial flora, especially in the vegetation or the vegetated topsoil. Furthermore, the improvement of the species diversity of the microbial flora can be expected to improve the antimicrobial and antiviral functions as the functions of the microorganisms by the various microbial species.

Therefore, when the aerosol-adsorbed mist falls on the vegetation or vegetated topsoil, the antimicrobial and antiviral functions of the microbial species can be efficiently used to reduce the risk of infection.

### <Other Exemplary Functional Configurations of Control Unit 12>

Fig. 33 is a block diagram of another exemplary configuration of the control device 12.

In Fig. 33, the elements corresponding to those in Fig. 3 are designated by the same characters and their description will not be repeated.

The control device 12 in Fig. 33 has a control unit 50 and a generation unit 111. Therefore, the control device 12 in Fig. 33 shares the same feature as the case in Fig. 3 in that the control unit 50 is provided. However, the control device 12 in Fig. 33 is different from the case in Fig. 3 in that the generation unit 111 is additionally provided.

The control device 12 can function as an AR (Augmented Reality) display control device that controls the display of AR objects on a terminal by generating the AR objects related to biodiversity that are displayed in AR in the target field as a space where mist is sprayed, and providing the objects to the terminal of the user.

Fig. 33 shows an exemplary configuration of the control device 12 that functions as such an AR display control device.

Here, the AR object is an object (image) that is displayed in AR through AR technology.

The generation unit 111 can generate AR objects in a heat map and a 3D graph that represent the biodiversity of each location for example within an area of high biodiversity in a target field, using the ecosystem information registered in the ecosystem information database 52.

The generation unit 111 can generate an AR object that displays the name of a plant species that emits a volatile component and an image of smoke that imitates the volatile component at the location of the plant species using the ecosystem information registered in the ecosystem information database 52. The plant species that emits a volatile component can be recognized for example from a database (not shown) that registers information on the plant species that emit volatile components.

In addition, the generation unit 111 can recognize the location where a mist curtain forms by sprayed mist from the spray information registered in the spray information database 53, obtain the location information on the user's terminal from the terminal, and generate for example an arrow AR object as a mark that guides the user to the mist curtain at a location close to the terminal.

The generation unit 111 transmits the AR object to a terminal located in the target field (or in the proximity of the target field) and thus performs display control to have the AR object displayed on the terminal.

Fig. 34 is a flowchart for illustrating an example of processing in generating an AR object that represents biodiversity by the generation unit 111.

In step S311, the generation unit 111 obtains the ecosystem information registered in the ecosystem information database 52, and the process proceeds to step S312.

In step S312, the generation unit 111 identifies, from the ecosystem information, a high-diversity area in the target field where the biodiversity is equal to or higher than a threshold, and the process proceeds to step S313.

In step S313, the generation unit 111 generates AR objects for example in a heat map and a 3D graph for the high-diversity area that represent the biodiversity of each location in the high-diversity area, and the process ends.

Fig. 35 is a view of how the user may observe a target field.

In Fig. 35, vegetation and a mist curtain formed by continuous spraying of mist are observed in the target field.

In Fig. 35, printed materials with markers such as a QR code^{®} are placed at various locations in the target field. The markers include location information that indicates where the marker (or the printed material with the marker printed thereon) is located.

In the control device 12, the generation unit 111 generates an AR object and transmits the generated AR object to the terminal 121 owned by the user in the target field.

The terminal 121 owned by the user receives the AR object from the generation unit 111.

If for example the terminal 121 is a pair of smart glasses, the user wears the smart glasses functioning as the terminal 121 and observes the target field.

The terminal 121 recognizes the location information on the location of the marker from the marker in the image of the field taken by the camera (not shown) of the terminal 121.

The smart glasses functioning as the terminal 121 identify the position where the AR object from the generation unit 111 should be placed from the position information and displays the AR object in AR as if the AR object is present at the position.

This allows the user to observe the AR object displayed in AR along with the target field in the real space.

Fig. 36 is a view of an example of an image in the field of view of a user through a pair of smart glasses as a terminal 121.

The user can observe objects that exist in the real world such as vegetation in the target field, a mist garden, and markers.

The user can also observe AR objects displayed in AR by the smart glasses functioning as the terminal 121.

In Fig. 36, a heat map that represents the biodiversity in each location within a high diversity area with high biodiversity in the target field is displayed as AR objects. In the heat map, the level of biodiversity in each location is indicated by variations in color, including differences in hue, saturation, and brightness.

In Fig. 36, the arrow is displayed as an AR object as a guidance mark to guide the user to the mist curtain.

For example, the guidance mark can be displayed to guide the user to a mist curtain close to the terminal 121, or to guide the user from the mist curtain closest to the terminal 121 to the next nearest mist curtain.

In addition to displaying AR objects in smart glasses as if these objects exist in the real space observed by the user, AR objects can also be displayed in an image taken of the real space for example using a smart phone.

Fig. 37 shows an example of a 3D graph that represents biodiversity as AR objects.

In the 3D graph indicating biodiversity by the AR objects, the xy-plane corresponds to the ground surface of the target field, and the biodiversity in each location on the xy-plane is represented in the z-direction perpendicular to the xy-plane.

In the 3D graph, the biodiversity in each location in the xy-plane is represented by a curved surface. In the 3D graph as shown in Fig. 37, a mesh pattern can be attached to the curved surface that represents biodiversity. Attaching the mesh pattern to the curved surface that represents biodiversity makes it easier for the user to recognize the degree of biodiversity in each location when the user looks at the 3D graph.

As described above, when AR objects in a heat map or a 3D graph that represents the biodiversity in each location are displayed in AR, the user can easily recognize, locations with high biodiversity.

The user who has recognized a location with high biodiversity can move to the location to enjoy an adjustment service for example for antimicrobial action and other various ecosystem services attributable to the high biodiversity with high performance.

Note that the control device 12 can identify locations (positions) that exhibit biodiversity equal to or higher than a certain level as diversity hotspots with high biodiversity.

Apart from spray control according to the diversity information, spray control according to population density, and spray control according to aerosol density, the control device 12 can control mist spraying so that a mist curtain is formed at a diversity hotspot.

For example, the control device 12 can control mist spraying so that a mist curtain is formed at a diversity hot spot on a regular or irregular basis.

For example, the control device 12 can control mist spraying so that a mist curtain is formed at a diversity hotspot when the population density increases or when the population density is equal to or higher than a threshold, depending on the population density of the diversity hotspot.

When the mist spray direction can be set, a mist curtain can be formed at a diversity hotspot by setting the spray direction so that the mist is sprayed toward the diversity hotspot.

When a plurality of nozzles 25 in a grid-like arrangement are mounted as nozzles above the field to cover the entire field with the spray direction fixed downward, a nozzle above a diversity hot spot can be selected as the nozzle to spray mist, so that a mist curtain can be formed at the diversity spot.

When a mist curtain is formed at a diversity hotspot, the user in the diversity hotspot can enjoy various ecosystem services, especially an adjustment service for example for antimicrobial action with higher performance.

For example, the present technique may be configured as cloud computing in which a plurality of devices share and cooperatively process one function via a network.

In addition, the respective steps of the control device 12 can be executed by one device or in a shared manner by a plurality of devices.

Furthermore, in a case in which one step includes a plurality of processes, the plurality of processes included in the one step can be executed by one device or executed in a shared manner by a plurality of devices.

The advantageous effects described in the present specification are merely exemplary and are not limited, and other advantageous effects may be achieved.

The present technology can be configured as follows.

<1>
   A program for causing a computer to function as a control unit that controls mist spraying to an ecosystem according to diversity information related to biodiversity of the ecosystem and target information related to biodiversity set as a target.
<2>
   The program according to <1> wherein the biodiversity information relates to biodiversity of at least one of a plant species, a microbial species, and an insect species.
<3>
   The program according to <1> or <2>, wherein the control unit controls at least one of a spray frequency, a time window, a spray amount, and a spray direction for spraying the mist.
<4>
   The program according to any one of <1> to <3>, wherein the control unit changes a manner of spraying the mist randomly.
<5>
   The program according to <4>, wherein the control unit changes the manner of spraying the mist randomly when the biodiversity has not changed toward the target represented by the target information.
<6>
   The program according to <4> or <5>, wherein the control unit changes the manner of spraying the mist randomly within a prescribed limit range.
<7>
   The program according to <6>, wherein the control unit sets the limit range according to an optimum humidity condition for growing at least one species.
<8>
   The program according to any one of <1> to <3>, wherein the control unit obtains a manner of spraying the mist using a learning model that takes the diversity information and the target information as input and the manner of spraying the mist as output.
<9>
   The program according to any one of <1> to <3>, wherein the control unit changes the manner of spraying the mist in response to an evaluation score obtained by evaluating the diversity information.
<10>
   The program according to any one of <1> to <9>, wherein the control unit controls the mist spraying according to population density.
<11>
   The program according to <10>, wherein the control unit estimates the population density using a carbon dioxide amount.
<12>
   The program according to <11>, wherein the control unit estimates the population density using a measured carbon oxide amount and a carbon oxide amount used through photosynthesis.
<13>
   The program according to any one of <1> to <12>, wherein the control unit controls the mist spraying in response to an aerosol amount.
<14>
   The program according to any one of <1> to <13>, wherein the control unit controls the mist spraying so that the mist is sprayed toward a person.
<15>
   The program according to <14>, wherein the control unit controls the mist spraying so that the mist is sprayed toward a person located in proximity to vegetation.
<16>
   The program according to any one of <1> to <15> for causing a computer to function as a generation unit that generates an AR (Augmented Reality) object related to the biodiversity and displayed in AR in a space in which the mist is sprayed and transmits the object to a terminal that performs AR display.
< 17>
   The program according to <16>, wherein the generation unit generates the AR object in a heat map or a three-dimensional graph that represents the biodiversity in each location.
<18>
   The program according to <16> or <17>, wherein the generation unit generates the AR object as a guidance mark that guides the user to a mist curtain formed by the mist.
<19>
   A control device including a control unit that controls mist spraying to an ecosystem according to diversity information related to biodiversity of the ecosystem and target information related to biodiversity set as a target.
<20>
   A method for controlling mist spraying to an ecosystem according to diversity information related to biodiversity of the ecosystem and target information related to biodiversity set as a target.

### [Reference Signs List]

10 Spraying system
11 Sensor device
12 Control unit
13 Spray device
21 Tank
22, 23 Flow control device
24 Water pipe
25 Nozzle
31 Input unit
32 Information processing unit
33 Memory
34 Recording drive
35 Output unit
41 Pump control unit
42 Pump
50 Control unit
51 Obtaining unit
52 Ecosystem information database
53 Spray information database
54 Spray information setting unit
111 Generation unit
121 Terminal

## Claims

1. A program for causing a computer to function as a control unit that controls mist spraying to an ecosystem according to diversity information related to biodiversity of the ecosystem and target information related to biodiversity set as a target.

2. The program according to claim 1, wherein the biodiversity information relates to biodiversity of at least one of a plant species, a microbial species, and an insect species.

3. The program according to claim 1, wherein the control unit controls at least one of a spray frequency, a time window, a spray amount, and a spray direction for spraying the mist.

4. The program according to claim 1, wherein the control unit changes a manner of spraying the mist randomly.

5. The program according to claim 4, wherein the control unit changes the manner of spraying the mist randomly when the biodiversity has not changed toward the target represented by the target information.

6. The program according to claim 4, wherein the control unit changes the manner of spraying the mist randomly within a prescribed limit range.

7. The program according to claim 6, wherein the control unit sets the limit range according to an optimum humidity condition for growing at least one species.

8. The program according to claim 1, wherein the control unit obtains a manner of spraying the mist using a learning model that takes the diversity information and the target information as input and generates the manner of spraying the mist as output.

9. The program according to claim 1, wherein the control unit changes the manner of spraying the mist in response to an evaluation score obtained by evaluating the diversity information.

10. The program according to claim 1, wherein the control unit controls the mist spraying according to population density.

11. The program according to claim 10, wherein the control unit estimates the population density using a carbon dioxide amount.

12. The program according to claim 11, wherein the control unit estimates the population density using a measured carbon oxide amount and a carbon oxide amount used through photosynthesis.

13. The program according to claim 1, wherein the control unit controls the mist spraying in response to an aerosol amount.

14. The program according to claim 1, wherein the control unit controls the mist spraying so that the mist is sprayed toward a person.

15. The program according to claim 14, wherein the control unit controls the mist spraying so that the mist is sprayed toward a person located in proximity to vegetation.

16. The program according to claim 1 for causing a computer to function as a generation unit that generates an AR (Augmented Reality) object related to the biodiversity and displayed in AR in a space in which the mist is sprayed and transmits the object to a terminal that performs AR display.

17. The program according to claim 16, wherein the generation unit generates the AR object in a heat map or a three-dimensional graph that represents the biodiversity in each location.

18. The program according to claim 16, wherein the generation unit generates the AR object as a guidance mark that guides a user to a mist curtain formed by the mist.

19. A control device comprising a control unit that controls mist spraying to an ecosystem according to diversity information related to biodiversity of the ecosystem and target information related to biodiversity set as a target.

20. A method for controlling mist spraying to an ecosystem according to diversity information related to biodiversity of the ecosystem and target information related to biodiversity set as a target.
